(19) Europäisches Patentamt
European Patent Office
Office européen des brevets

(11) **EP 4 618 617 A1**

(12) **EUROPEAN PATENT APPLICATION**
published in accordance with Art. 153(4) EPC

(43) Date of publication:
**17.09.2025 Bulletin 2025/38**

(51) International Patent Classification (IPC):
***H04W 28/10*** (2009.01)

(21) Application number: **23890192.0**

(52) Cooperative Patent Classification (CPC):
**H04W 28/10; H04W 28/16; H04W 72/0453**

(22) Date of filing: **29.06.2023**

(86) International application number:
**PCT/CN2023/103534**

(87) International publication number:
**WO 2024/103750 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.11.2022 CN 202211441914**

(71) Applicant: **Huawei Technologies Co., Ltd.**
**Shenzhen, Guangdong 518129 (CN)**

(72) Inventors:
• **HU, Mengshi**
  **Shenzhen, Guangdong 518129 (CN)**
• **YU, Jian**
  **Shenzhen, Guangdong 518129 (CN)**
• **GAN, Ming**
  **Shenzhen, Guangdong 518129 (CN)**

(74) Representative: **Maiwald GmbH**
**Engineering**
**Elisenhof**
**Elisenstrasse 3**
**80335 München (DE)**

(54) **COMMUNICATION METHOD AND COMMUNICATION APPARATUS**

(57) This application relates to the communication field, and in particular, to a method and a communication apparatus for segment parsing of a high-frequency channel. The solutions may be applied to a WLAN system supporting 802.11 series protocols, for example, a next-generation Wi-Fi protocol of IEEE 802.11ax, such as 802.11be, Wi-Fi 7, or EHT, and for another example, a next-generation protocol of 802.11be, and Wi-Fi 8, or applied to a UWB-based wireless personal area network system and a sensing system. In this method, after processing coded bits, a stream parser inputs a bit stream to a segment parser, and the segment parser performs segment parsing on the bit stream. That is, the segment parser allocates, through L output branches, the bit stream to L frequency domain subblocks located at a high frequency (for example, a frequency value is greater than or equal to 45 GHz). In this way, segment parsing can be performed on the bit stream by using the segment parser in the high-frequency channel.

1100

FIG. 11

**Description**

This application claims priority to Chinese Patent Application No. 202211441914.2, filed with the China National Intellectual Property Administration on November 17, 2022 and entitled "COMMUNICATION METHOD AND COMMUNICATION APPARATUS", which is incorporated herein by reference in its entirety.

**TECHNICAL FIELD**

This application relates to the field of communication technologies, and more specifically, to a communication method and a communication apparatus.

**BACKGROUND**

Development of a wireless local area network (wireless local area network, WLAN) has gone through many generations, including standards below 7 GHz, such as 802.11a/b/g, 802.11n, 802.11ac, 802.11ax, and currently discussed 802.11be, and further including high-frequency standards, such as 802.11ad and 802.11ay standards that operate at around 60 GHz. In terms of channel configurations of the high-frequency standards, 802.11ad supports a 2.16 GHz channel, and 802.11ay further supports 4.32 GHz, 6.48 GHz, 8.64 GHz, 2.16+2.16 GHz, and 4.32+4.32 GHz channels in addition to the 2.16 GHz channel. How to use a segment parser to perform segment parsing in a high-frequency channel is a problem worth considering.

**SUMMARY**

This application provides a communication method and a communication apparatus, so that a bit stream can be divided into a plurality of outputs in a high-frequency channel.
According to a first aspect, a communication method is provided. The method may be performed by a communication apparatus, or may be performed by a component (for example, a chip, a circuit, or a module) in a communication apparatus. This is not limited in this application. Optionally, a component in the communication apparatus is a segment parser. The following uses an example in which the method is performed by the segment parser for description.
The method may include: The segment parser obtains an output bit stream of a stream parser. The segment parser allocates the output bit stream to L frequency domain subblocks. The L frequency domain subblocks are located at a high frequency, a frequency value of the high frequency is greater than or equal to 45 GHz, and L is an integer greater than 1.
Based on the foregoing technical solution, in a high-frequency scenario, for example, in a scenario in which a frequency value is greater than or equal to 45 GHz, one frequency domain subblock corresponds to one output branch, and the segment parser allocates, through L output branches, the bit stream obtained from the stream parser to the L frequency domain subblocks. In this way, the bit stream can be divided into a plurality of blocks (or referred to as a plurality of slices or a plurality of channels) by using the segment parser in a high-frequency channel for output.
With reference to the first aspect, in some implementations of the first aspect, the L frequency domain subblocks include a first frequency domain subblock, the first frequency domain subblock includes a first subcarrier, and the first subcarrier is an additional subcarrier in a non-aggregated channel compared with an aggregated channel.
Based on the foregoing technical solution, the first frequency domain subblock includes the additional subcarrier in the non-aggregated channel compared with the aggregated channel. In this way, the additional subcarrier in the non-aggregated channel compared with the aggregated channel may also correspond to an output branch of the segment parser. That is, the segment parser allocates the output bit stream to each frequency domain subblock through an output branch corresponding to each frequency domain subblock.
With reference to the first aspect, in some implementations of the first aspect, the L frequency domain subblocks further include a second frequency domain subblock, the second frequency domain subblock includes a second subcarrier, and the second subcarrier is not the first subcarrier.
With reference to the first aspect, in some implementations of the first aspect, the first frequency domain subblock includes the first subcarrier.
Based on the foregoing technical solution, the first frequency domain subblock includes the first subcarrier. In this way, the first subcarrier may independently correspond to one output branch of the segment parser. That is, the segment parser allocates the output bit stream to the first subcarrier through an output branch corresponding to the first subcarrier.
With reference to the first aspect, in some implementations of the first aspect, the first subcarrier is not contiguous in frequency domain.
For example, there are a plurality of first subcarriers. It is assumed that first subcarriers that are contiguous in frequency domain are referred to as a first subcarrier group. In this case, that the first subcarriers are not contiguous in frequency domain may alternatively be replaced with that at least two first subcarrier groups are not contiguous in frequency domain.

Based on the foregoing technical solution, the first subcarrier included in the first frequency domain subblock is not contiguous in frequency domain. In this way, it is equivalent to that the first subcarrier that is not contiguous in frequency domain correspond to one output branch of the segment parser.

With reference to the first aspect, in some implementations of the first aspect, in addition to the first subcarrier, the first frequency domain subblock further includes a second subcarrier, and the second subcarrier is not the first subcarrier.

For example, the second subcarrier is a subcarrier in the aggregated channel.

Based on the foregoing technical solution, a subcarrier corresponding to the first frequency domain subblock may include a subcarrier in the aggregated channel and the first subcarrier. In this way, it is equivalent to that the subcarrier in the aggregated channel and the first subcarrier correspond to one output branch of the segment parser.

With reference to the first aspect, in some implementations of the first aspect, a quantity of output bits allocated by the segment parser to the L frequency domain subblocks meets the following relationship:

$$S_i = N_i \cdot s$$

$S_i$ is a quantity of output bits allocated to an $i^{th}$ frequency domain subblock in one round, $N_i$ is a positive integer obtained by rounding a quotient of a number of subcarriers included in the $i^{th}$ frequency domain subblock and a preset number of subcarriers, $s = \max\left(1, \dfrac{N_{BPSCS}}{2}\right)$, and $N_{BPSCS}$ is a quantity of output bits corresponding to one subcarrier in one stream.

With reference to the first aspect, in some implementations of the first aspect, the L frequency domain subblocks include one first frequency domain subblock and two second frequency domain subblocks, the first frequency domain subblock includes z first subcarriers, one second frequency domain subblock includes x1 second subcarriers, and the other second frequency domain subblock includes x2 second subcarriers.

Quantities of output bits allocated by the segment parser to the first frequency domain subblock and the two second frequency domain subblocks in at least one round are respectively s, $N_1$s, and $N_2$s. $N_1 = \left\lfloor \dfrac{x_1}{z} \right\rfloor$, and $N_2 = \left\lfloor \dfrac{x_2}{z} \right\rfloor$.

With reference to the first aspect, in some implementations of the first aspect, the segment parser allocates the output bit stream to the L frequency domain subblocks in a cyclic polling manner.

With reference to the first aspect, in some implementations of the first aspect, in at least one round of allocating the output bit stream by the segment parser to the L frequency domain subblocks in the cyclic polling manner, bits allocated by the segment parser to at least one of the L frequency domain subblocks are a result of being allocated at least twice.

Based on the foregoing technical solution, if a quantity of bits allocated by the segment parser to a frequency domain subblock in one round is $N_i$s, the quantity of bits allocated to the frequency domain subblock in the round may be obtained by the segment parser outputting at least twice through an output branch corresponding to the frequency domain subblock. In this way, bits on each frequency domain subblock may be more dispersed, thereby improving transmission performance.

With reference to the first aspect, in some implementations of the first aspect, each of the L frequency domain subblocks corresponds to one interleaver, and the interleaver is configured to interleave bits allocated to a corresponding frequency domain subblock.

According to a second aspect, a communication apparatus is provided. The apparatus is configured to perform the method according to the first aspect. Specifically, the apparatus may include units and/or modules configured to perform the method in the first aspect, for example, an allocation unit and/or an obtaining unit.

According to a third aspect, a computer-readable storage medium is provided. The computer-readable storage medium stores program code to be executed by a device, and the program code is used to perform the method according to any one of the implementations of the first aspect.

According to a fourth aspect, a computer program product including instructions is provided. When the computer program product is run on a computer, the computer is enabled to perform the method according to any one of the implementations of the first aspect.

## BRIEF DESCRIPTION OF DRAWINGS

FIG. 1 is a diagram of a wireless communication system 100 applicable to an embodiment of this application;
FIG. 2 is a diagram of a channel configuration in a high-frequency standard;
FIG. 3 is a diagram of a 2.16+2.16 GHz (aggregated) channel and a 4.32 GHz (non-aggregated) channel;
FIG. 4 is a diagram of existing high-frequency transmission modules;
FIG. 5 is a diagram of an output of a segment parser;
FIG. 6 is another diagram of outputs of a segment parser;
FIG. 7 is another diagram of outputs of a segment parser;
FIG. 8 is a diagram of subcarrier usage manners in 802.11be;
FIG. 9 is a diagram of a 2.16 GHz channel, a 2.16+2.16 GHz channel, and a 4.32 GHz channel in 802.11ay;
FIG. 10 is a diagram of a 4.32 GHz channel, a 4.32+4.32 GHz channel, and an 8.64 GHz channel in 802.11ay;
FIG. 11 is a diagram of a communication method 1100 according to an embodiment of this application;
FIG. 12 is a diagram of a subcarrier group #A;
FIG. 13 is another diagram of a subcarrier group #A;
FIG. 14 is a diagram of non-aggregation between two high-frequency channel elements;
FIG. 15 is a diagram of non-aggregation between three high-frequency channel elements;
FIG. 16 is another diagram of non-aggregation between three high-frequency channel elements;
FIG. 17 is another diagram of non-aggregation between two high-frequency channel elements;
FIG. 18 is another diagram of non-aggregation between two high-frequency channel elements;
FIG. 19 is a diagram of a communication apparatus 1900 according to an embodiment of this application;
FIG. 20 is a diagram of another communication apparatus 2000 according to an embodiment of this application;
FIG. 21 is a diagram of a chip system 2100 according to an embodiment of this application; and
FIG. 22 is a diagram of a communication system 2200 according to an embodiment of this application.

## DESCRIPTION OF EMBODIMENTS

The following describes technical solutions of this application with reference to accompanying drawings.

The technical solutions provided in this application may be applied to a wireless local area network (wireless local area network, WLAN) system, and support an IEEE 802.11-related standard, for example, the 802.11a/b/g standard, the 802.11n standard, the 802.11ac standard, the 802.11ax standard, the 802.11be standard (also referred to as the Wi-Fi 7 standard), or the Wi-Fi 8 standard; or may be applied to an IEEE high-frequency standard, for example, the 802.11ad standard or the 802.11ay standard; or may be applied to the 802.15 standard or applied to the 802.11bf standard for sensing. The 802.11n standard is referred to as high throughput (high throughput, HT), the 802.11ac standard is referred to as very high throughput (very high throughput, VHT), the 802.11ax standard is referred to as high efficient (high efficient, HE), the 802.11be standard is referred to as extremely high throughput (extremely high throughput, EHT), the 802.11ad standard is referred to as directional multi-gigabit (directional multi-gigabit, DMG), and the 802.11ay standard is referred to as enhanced directional multi-gigabit (enhanced directional multi-gigabit, EDMG).

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any appropriate wireless network.

The technical solutions provided in this application may be applied to various communication systems, for example, a WLAN communication system, a wireless fidelity (wireless fidelity, Wi-Fi) system, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

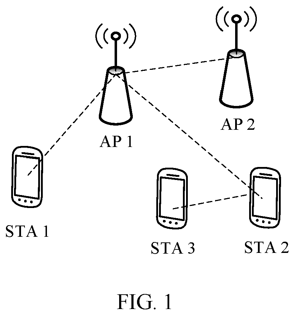

For example, FIG. 1 is a diagram of a WLAN communication system 100 applicable to an embodiment of this application. As shown in FIG. 1, the wireless communication system 100 may include at least one access point (access point, AP), for example, an AP1 and an AP 2 shown in FIG. 1. The wireless communication system 100 may further include at least one station (station, STA), for example, a STA 1, a STA 2, and a STA 3 shown in FIG. 1. The technical solutions provided in this application may be applied to communication between access points, for example, communication between the AP 1 and the AP 2. The technical solutions provided in this application may be further applied to communication between stations, for example, communication between the STA 2 and the STA 3. The technical solutions provided in this application may be further applied to communication between an access point and a station, for example, communication between the AP 1 and the STA 1, and communication between the AP 1 and the STA 2.

The access point may be an access point used by a terminal to access a wired (or wireless) network, and is mainly deployed at home, in a building, and in a campus. A typical coverage radius is tens of meters to hundreds of meters. Certainly, the access point may alternatively be deployed outdoors. The access point is equivalent to a bridge that connects a wired network and a wireless network. A main function of the access point is to connect various wireless network clients together and then connect the wireless network to the Ethernet.

For example, the access point may be a terminal or a network device with a Wi-Fi chip. The network device may be a server, a router, a switch, a bridge, a computer, a mobile phone, a relay station, an in-vehicle device, a wearable device, a network device in a 5G network, a network device in a future 6G network, a network device in a public land mobile communication network (public land mobile network, PLMN), or the like. This is not limited in embodiments of this application. The access point may be a device that supports a Wi-Fi standard. For example, the access point may also support one or more standards of the Institute of Electrical and Electronics Engineers (Institute of Electrical and Electronics Engineers, IEEE) 802.11 family, such as 802.11a, 802.11b, 802.11g, 802.11n, 802.11ac, 802.11ax, 802.11be, 802.11ad, and 802.11ay.

The station may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The station may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, or another processing device connected to a wireless modem, a vehicle-mounted device, an Internet of things device, a wearable device, a terminal device in a 5G network, a terminal device in a future 6G network, a terminal device in a PLMN, or the like. This is not limited in this embodiment of this application. The station may be a device that supports a WLAN standard. For example, the station may support one or more standards of the IEEE 802.11 family, such as 802.11a, 802.11b, 802.11g, 802.11n, 802.11ac, 802.11ax, 802.11be, 802.11ad, and 802.11ay.

For example, the station may be a mobile phone, a tablet computer, a set-top box, a smart television, a smart wearable device, an in-vehicle communication device, a computer, a node or a sensor in an Internet of things (internet of things, IoT), a smart camera, a smart remote control, or a smart water or electricity meter in a smart home, a sensor in a smart city, and the like.

The access point and the station may be deployed on land, including indoors or outdoors, and may be held in hands or deployed in vehicles; or may be deployed on water; or may be deployed on an airplane, a balloon, and a satellite in the air. A scenario in which the access point and the station are located is not limited in this application.

The access point or the station may include a processor. Optionally, the access point or the station may further include a transmitter, a receiver, a memory, and the like.

Communication may be performed between devices (for example, between APs, between an AP and a STA, or between STAs) by using an orthogonal frequency division multiplexing (orthogonal frequency division multiplexing, OFDM) technology. In the OFDM technology, a frequency domain resource is divided into several sub-resources, and each sub-resource in frequency domain is referred to as a subcarrier (subcarrier). A subcarrier may also be understood as the smallest granularity of frequency domain resources, and a frequency difference between adjacent subcarriers is referred to as a subcarrier spacing. The solutions of this application may be applied to a system using the OFDM technology.

**Description of technologies related to this application:**

1. Non-aggregated channel and aggregated channel

Development of a WLAN has gone through many generations of standards, including standards below 7 GHz, such as 802.11a/b/g, 802.11n, 802.11ac, 802.11ax, and currently discussed 802.11be, and further including high-frequency standards, such as 802.11ad and 802.11ay standards that operate at around 60 GHz.

In terms of channel configurations of the low-frequency standards, 802.11ax currently supports the following channel configurations: 20 megahertz (MHz), 40 MHz, 80 MHz, 160 MHz, and 80+80 MHz channels. A difference between the 160 MHz channel and the 80+80 MHz channel lies in that the former is a contiguous frequency band, while two 80 MHz channels of the latter may be separated. 802.11be supports only contiguous channels, such as 20 MHz, 40 MHz, 80 MHz, 160 MHz and 320 MHz channels.

In terms of channel configurations of high-frequency standards, 802.11ad supports a 2.16 gigahertz (GHz) channel, 802.11ay supports more 2.16 GHz channels, and further supports 4.32 GHz, 6.48 GHz, 8.64 GHz, 2.16+2.16 GHz, and 4.32+4.32 GHz channels.

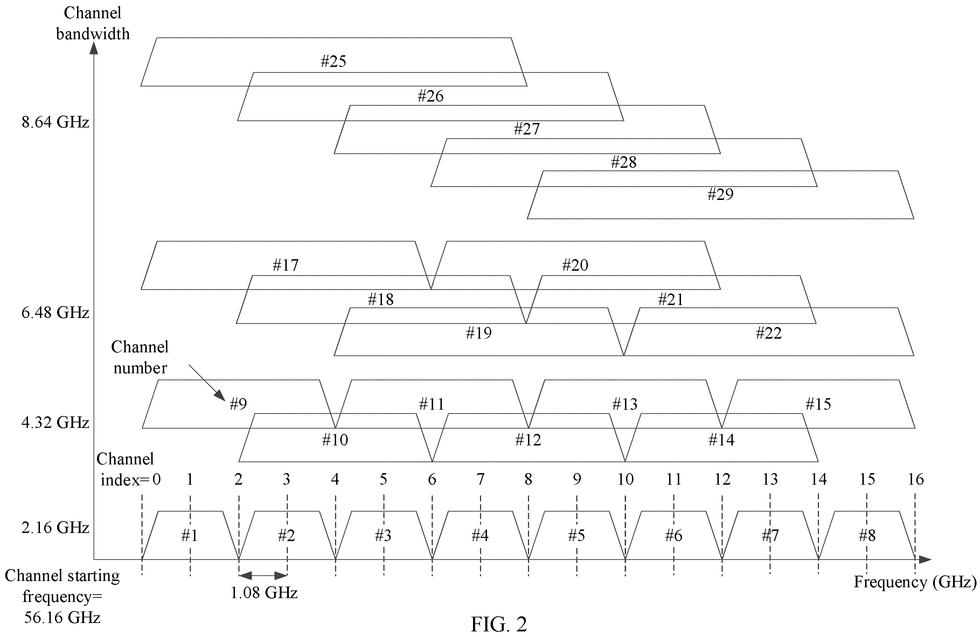

For example, FIG. 2 is a diagram of a channel configuration in a high-frequency standard. As shown in FIG. 2, channel numbers supported by 802.11ad are #1, #2, #3, and #4. Channel numbers supported by 802.11ay are #1 to #29, and the channel numbers #1 to #29 may also be referred to as channel identifiers 1 to 29. In FIG. 2, channel indexes (channel index) represent different frequency values, and frequency values represented by channel indexes 0 to 16 are respectively 57.24 GHz, 58.32 GHz, 59.4 GHz, 60.48 GHz, 61.56 GHz, 62.64 GHz, 63.72 GHz, 64.8 GHz, 65.88 GHz, 66.96 GHz, 68.04 GHz, 69.12 GHz, 70.2 GHz, 71.28 GHz, 72.36 GHz, 73.44 GHz, and 74.52 GHz. A difference between two adjacent frequency positions is 1.08 GHz.

In addition, in FIG. 2, #1, #2, ..., and #29 represent channel numbers, and are used to identify channels. Channels #1 to #8 are 2.16 GHz channels, channels #9 to #15 are 4.32 GHz channels, channels #17 to #22 are 6.48 GHz channels, and channels #25 to #29 are 8.64 GHz channels. Currently, channel numbers supported by the standard 802.11ad are #1, #2, #3, and #4, and channel numbers supported by the standard 802.11ay are #1 to #29. A channel width of each channel is a frequency difference between a starting frequency and an ending frequency of the channel.

Based on the foregoing channels, there may also be an aggregated (aggregate) channel, which includes two or more channels from #1 to #29, for example, a 2.16+2.16 GHz channel, or a 4.32+4.32 GHz channel.

All the foregoing channels except the 2.16 GHz channel may be derived from the 2.16 GHz channel. For example, channels #1 to #8 are represented as eight bits from low to high frequencies, and the bit is set to 1 to indicate an occupied corresponding channel.

A 4.32 GHz channel may be represented as 11000000, 01100000, 00110000, 00011000, 00001100, 00000110, or 00000011.

A 6.48 GHz channel may be represented as 11100000, 01110000, 00111000, 00011100, 00001110, or 00000111.

An 8.64 GHz channel may be represented as 11110000, 01111000, 00111100, 00011110, or 00001111.

The 2.16+2.16 GHz channel may be represented as 11000000, 10100000, 10010000, 01100000, 00101000, ....

The 4.32+4.32 GHz channel may be, for example, 11110000, 11011000, 11001100, 01101100, 01111000, ....

It can be found from the foregoing that, the 4.32 GHz channel and the 2.16+2.16 GHz channel are used as an example, and both occupy two 2.16 GHz channels, but are different from each other. That is, the 2.16+2.16 GHz channel may be understood as two independent (or may be referred to as aggregated) 2.16 GHz channels, while the 4.32 GHz channel is a larger contiguous channel formed by aggregating two 2.16 GHz channels, which is referred to as a non-aggregated (not aggregate) channel or a bonded (bonded) channel in the standard. Because the 2.16+2.16 GHz channel is a channel formed by two independent 2.16 GHz channels, there is no need for a constraint of "must be contiguous" between the channels. The so-called "must be contiguous" means that there are two contiguous bits that are set to 1 in the foregoing eight bits. For the 4.32 GHz channel, the foregoing constraint of "must be contiguous" needs to be complied with, to form a larger bonded channel. A principle of a relationship between the 8.64 GHz channel and the 4.32+4.32 GHz channel is similar to the foregoing principle. The 8.64 GHz channel is referred to as a non-aggregated channel, while the 4.32+4.32 GHz channel is referred to as an aggregated channel, and is formed by aggregating two independent 4.32 GHz channels.

The following describes a difference between an aggregated channel and a non-aggregated channel used in 802.11ay.

In 802.11ay, supported non-aggregated channels are shown in Table 1.

Table 1

| Channel configuration | 8-bit representation (from low to high) | Primary channel | Channel width |
|---|---|---|---|
| 1 | 10000000 | 1 | 2.16 GHz |
| 2 | 01000000 | 2 | |
| 3 | 00100000 | 3 | |
| 4 | 00010000 | 4 | |
| 5 | 00001000 | 5 | |
| 6 | 00000100 | 6 | |
| 7 | 00000010 | 7 | |
| 8 | 00000001 | 8 | |
| 9 | 11000000 | 1 | 4.32 GHz |
| 10 | | 2 | |
| 11 | 01100000 | 2 | |
| 12 | | 3 | |
| 13 | 00110000 | 3 | |
| 14 | | 4 | |
| 15 | 00011000 | 4 | |
| 16 | | 5 | |
| 17 | 00001100 | 5 | |
| 18 | | 6 | |
| 19 | 00000110 | 6 | |
| 20 | | 7 | |
| 21 | 00000011 | 7 | |
| 22 | | 8 | |
| 23 | 11100000 | 1 | 6.48 GHz |
| 24 | | 2 | |
| 25 | | 3 | |
| 26 | 01110000 | 2 | |
| 27 | | 3 | |
| 28 | | 4 | |
| 29 | 00111000 | 3 | |
| 30 | | 4 | |
| 31 | | 5 | |
| 32 | 00011100 | 4 | |
| 33 | | 5 | |
| 34 | | 6 | |
| 35 | 00001110 | 5 | |
| 36 | | 6 | |
| 37 | | 7 | |
| 38 | 00000111 | 6 | |

(continued)

| Channel configuration | 8-bit representation (from low to high) | Primary channel | Channel width |
|---|---|---|---|
| 39 | | 7 | |
| 40 | | 8 | |
| 41 | 11110000 | 1 | |
| 42 | 11110000 | 2 | |
| 43 | 11110000 | 3 | |
| 44 | 11110000 | 4 | |
| 45 | 01111000 | 2 | |
| 46 | 01111000 | 3 | |
| 47 | 01111000 | 4 | |
| 48 | 01111000 | 5 | |
| 49 | 00111100 | 3 | 8.64 GHz |
| 50 | 00111100 | 4 | |
| 51 | 00111100 | 5 | |
| 52 | 00111100 | 6 | |
| 53 | 00011110 | 4 | |
| 54 | 00011110 | 5 | |
| 55 | 00011110 | 6 | |
| 56 | 00011110 | 7 | |
| 57 | 00001111 | 5 | |
| 58 | 00001111 | 6 | |
| 59 | 00001111 | 7 | |
| 60 | 00001111 | 8 | |

In 802.11ay, supported 2.16+2.16 GHz aggregated channels are shown in Table 2.

Table 2

| Channel configuration | 8-bit representation (from low to high) | Primary channel |
|---|---|---|
| 61 | 11000000 | 1 |
| 62 | 10100000 | 1 |
| 63 | 10010000 | 1 |
| 64 | 10001000 | 1 |
| 65 | 10000100 | 1 |
| 66 | 10000010 | 1 |
| 67 | 10000001 | 1 |
| 68 | 11000000 | 2 |
| 69 | 01100000 | 2 |
| 70 | 01010000 | 2 |
| 71 | 01001000 | 2 |
| 72 | 01000100 | 2 |
| 73 | 01000010 | 2 |

(continued)

| Channel configuration | 8-bit representation (from low to high) | Primary channel |
|---|---|---|
| 74 | 01000001 | 2 |
| 75 | 10100000 | 3 |
| 76 | 01100000 | 3 |
| 77 | 00110000 | 3 |
| 78 | 00101000 | 3 |
| 79 | 00100100 | 3 |
| 80 | 00100010 | 3 |
| 81 | 00100001 | 3 |
| 82 | 10010000 | 4 |
| 83 | 01010000 | 4 |
| 84 | 00110000 | 4 |
| 85 | 00011000 | 4 |
| 86 | 00010100 | 4 |
| 87 | 00010010 | 4 |
| 88 | 00010001 | 4 |
| 89 | 10001000 | 5 |
| 90 | 01001000 | 5 |
| 91 | 00101000 | 5 |
| 92 | 00011000 | 5 |
| 93 | 00001100 | 5 |
| 94 | 00001010 | 5 |
| 95 | 00001001 | 5 |
| 96 | 10000100 | 6 |
| 97 | 01000100 | 6 |
| 98 | 00100100 | 6 |
| 99 | 00010100 | 6 |
| 100 | 00001100 | 6 |
| 101 | 00000110 | 6 |
| 102 | 00000011 | 6 |
| 103 | 10000010 | 7 |
| 104 | 01000010 | 7 |
| 105 | 00100010 | 7 |
| 106 | 00010010 | 7 |
| 107 | 00001010 | 7 |
| 108 | 00000110 | 7 |
| 109 | 00000011 | 7 |
| 110 | 10000001 | 8 |
| 111 | 01000001 | 8 |
| 112 | 00100001 | 8 |

(continued)

| Channel configuration | 8-bit representation (from low to high) | Primary channel |
|---|---|---|
| 113 | 00010001 | 8 |
| 114 | 00001001 | 8 |
| 115 | 00000101 | 8 |
| 116 | 00000011 | 8 |

In 802.11ay, supported 4.32+4.32 GHz aggregated channels are shown in Table 3.

Table 3

| Channel configuration | 8-bit representation (from low to high) | Primary channel |
|---|---|---|
| 117 | 11110000 | 1 |
| 118 | | 2 |
| 119 | 11011000 | 1 |
| 120 | | 2 |
| 121 | 11001100 | 1 |
| 122 | | 2 |
| 123 | 11000110 | 1 |
| 124 | | 2 |
| 125 | 11000011 | 1 |
| 126 | | 2 |
| 127 | 01111000 | 2 |
| 128 | | 3 |
| 129 | 01101100 | 2 |
| 130 | | 3 |
| 131 | 01100110 | 2 |
| 132 | | 3 |
| 133 | 01100011 | 2 |
| 134 | | 3 |
| 135 | 11110000 | 3 |
| 136 | | 4 |
| 137 | 00111100 | 3 |
| 138 | | 4 |
| 139 | 00110110 | 3 |
| 140 | | 4 |
| 141 | 00110011 | 3 |
| 142 | | 4 |
| 143 | 11011000 | 4 |
| 144 | | 5 |
| 145 | 01111000 | 4 |
| 146 | | 5 |

(continued)

| Channel configuration | 8-bit representation (from low to high) | Primary channel |
|---|---|---|
| 147 | 00011110 | 4 |
| 148 | | 5 |
| 149 | 00011011 | 4 |
| 150 | | 5 |
| 151 | 11001100 | 5 |
| 152 | | 6 |
| 153 | 01101100 | 5 |
| 154 | | 6 |
| 155 | 00111100 | 5 |
| 156 | | 6 |
| 157 | 00001111 | 5 |
| 158 | | 6 |
| 159 | 11000110 | 6 |
| 160 | | 7 |
| 161 | 01100110 | 6 |
| 162 | | 7 |
| 163 | 00110110 | 6 |
| 164 | | 7 |
| 165 | 00011110 | 6 |
| 166 | | 7 |
| 167 | 11000011 | 7 |
| 168 | | 8 |
| 169 | 01100011 | 7 |
| 170 | | 8 |
| 171 | 00110011 | 7 |
| 172 | | 8 |
| 173 | 00011011 | 7 |
| 174 | | 8 |
| 175 | 00001111 | 7 |
| 176 | | 8 |

The following uses the 2.16+2.16 GHz channel (aggregated channel) and the 4.32 GHz channel (non-aggregated channel) as an example to specifically describe a difference in subcarrier distribution in the case of a same channel width.

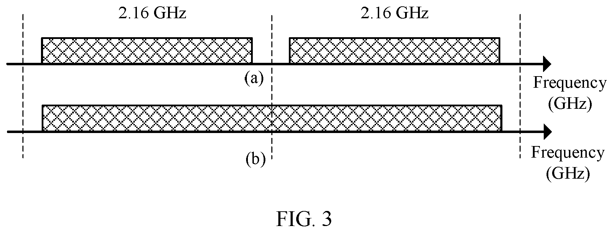

For example, FIG. 3 is a diagram of the 2.16+2.16 GHz channel (aggregated channel) and the 4.32 GHz channel (non-aggregated channel). (a) in FIG. 3 is a diagram of the 2.16+2.16 GHz channel, and (b) in FIG. 3 is a diagram of the 4.32 GHz channel. In FIG. 3, a shaded area may be considered as a range in which a data subcarrier, a pilot subcarrier, and a direct current subcarrier are located. As shown in FIG. 3, the 2.16+2.16 GHz channel includes two independent 2.16 GHz channels. In the 4.32 GHz channel, two contiguous 2.16 GHz channels are considered as a whole for subcarrier distribution.

In the standard, to describe a size of a contiguous channel, a representation manner in which an $N_{CB}$ is equal to 1, 2, 3, or 4 is used. The $N_{CB}$ represents a number of contiguous channel bandwidths (number of contiguous channel bandwidths). The $N_{CB}$ being 1 represents the 2.16 GHz channel or the 2.16+2.16 GHz channel; the $N_{CB}$ being 2 represents the 4.32 GHz channel or the 4.32+4.32 GHz channel; the $N_{CB}$ being 3 represents the 6.48 GHz channel; and the $N_{CB}$ being 4 represents the 8.64 GHz channel. Table 4 shows channel configurations for the $N_{CB}$ being 1, 2, 3, or 4.

Table 4

| Parameter | Value | | | |
|---|---|---|---|---|
| | $N_{CB}$=1 | $N_{CB}$=2 | $N_{CB}$=3 | $N_{CB}$=4 |
| $N_{SD}$: Number of data subcarriers | 336 | 734 | 1134 | 1532 |
| $N_{SP}$: Number of pilot subcarriers | 16 | 36 | 56 | 76 |
| $N_{DC}$: Number of direct current subcarriers | 3 | 3 | 3 | 3 |
| $N_{ST}$: Number of subcarriers | 355 | 773 | 1193 | 1611 |
| $N_{SR}$: Number of subcarriers occupying half of the overall bandwidth | 177 | 386 | 596 | 805 |
| $N_{GI\ short}$: Short guard interval length | 48 | 96 | 144 | 192 |
| $N_{GI\ normal}$: Normal guard interval length | 96 | 192 | 288 | 384 |
| $N_{GI\ long}$: Long guard interval length | 192 | 384 | 576 | 768 |
| ΔF: Subcarrier frequency spacing | 5.15625 MHz | 5.15625 MHz | 5.15625 MHz | 5.15625 MHz |
| $F_s$: EDMG OFDM sample rate | 2.64 GHz | 5.28 GHz | 7.92 GHz | 10.56 GHz |
| $T_s$: EDMG OFDM sample time duration | 0.38 ns | 0.19 ns | 0.13 ns | 0.09 ns |
| $N_{DFT}$: DFT size | 512 | 1024 | 1536 | 2048 |
| $T_{DFT}$: OFDM IDFT/DFT period | 0.194 μs | 0.194 μs | 0.194 μs | 0.194 μs |
| $T_{GI\ shor}$: Short guard interval duration | 18.18 ns | 18.18 ns | 18.18 ns | 18.18 ns |
| $T_{GI\ normal}$: Normal guard interval duration | 36.36 ns | 36.36 ns | 36.36 ns | 36.36 ns |
| $T_{GI\ long}$: Long guard interval duration | 72.72 ns | 72.72 ns | 72.72 ns | 72.72 ns |

It can be learned from Table 4 that a number of subcarriers in the 2.16 GHz channel is 355, in other words, a number of subcarriers (a number of direct current subcarriers+a number of data subcarriers+a number of pilot subcarriers) in the aggregated 2.16+2.16 GHz channel is 710, and a number of subcarriers (a number of direct current subcarriers+a number of data subcarriers+a number of pilot subcarriers) in the 4.32 GHz channel is 773. The 4.32 GHz channel has a larger number of subcarriers than the 2.16+2.16 GHz channel because in the 4.32 GHz channel, two contiguous 2.16 GHz channels are considered as a whole for subcarrier distribution. With reference to FIG. 3, as shown in FIG. 3, a shaded area in (b) of FIG. 3 is greater than a shaded area in (a) of FIG. 3. If only data subcarriers are viewed, a number of data subcarriers corresponding to the 2.16 GHz channel is 336, and a number of data subcarriers corresponding to the 4.32 GHz channel is 734. In other words, for the case of occupying two adjacent channel bandwidths, the non-aggregated 4.32 GHz channel has more data subcarriers than the aggregated 2.16+2.16 GHz channel. Similarly, numbers of data subcarriers corresponding to the non-aggregated 6.48 GHz channel and the non-aggregated 8.64 GHz channel are respectively 1134 and 1532, and are also respectively greater than 3*336 and 4*336. Similarly, a number of data subcarriers corresponding to the non-aggregated 8.64 GHz channel is greater than a number of data subcarriers corresponding to the aggregated 4.32+4.32 GHz channel.

It may be understood that, according to definitions of an aggregated channel and a non-aggregated channel, a low-frequency channel may be understood as an aggregated channel, or use of a low-frequency channel may be understood as being in an aggregated state.

2. Brief description of a transmission procedure in a high-frequency OFDM mode

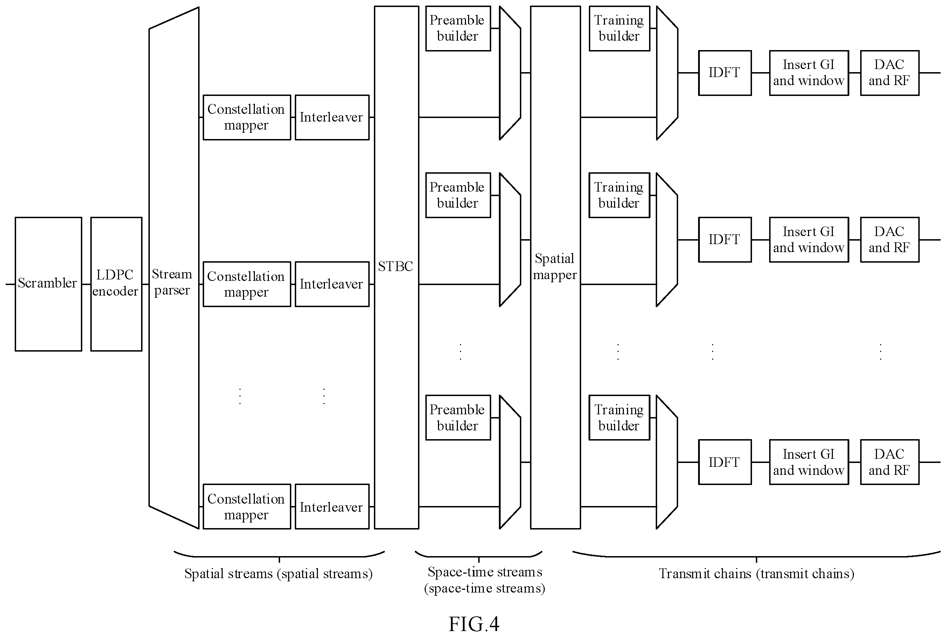

FIG. 4 is a diagram of existing high-frequency transmission modules by using physical layer protocol data unit (physical layer protocol data unit, PPDU) transmission as an example. Functions of modules in FIG. 4 are briefly described as follows.

(1) Scrambler (scrambler): Perform a scrambling operation on data bits. This operation can reduce a probability of contiguous 0s and contiguous 1s in a data sequence.

(2) Low-density parity-check code encoder (low density parity check code encoder, LDPC encoder): Encode data. It may be understood that LDPC coding herein is merely an example for description, and a specific coding scheme is not limited.

(3) Stream parser (stream parser): Divide bits output by a low-density parity-check code encoder into a plurality of streams of bit sequences.

(4) Constellation mapper (constellation mapper): Map a bit sequence to constellation points.

(5) Interleaver (interleaver): Perform subcarrier interleaving inside an OFDM symbol.

(6) Space-time block code (space-time block code, STBC): Spread a spatial stream into a space-time stream.

(7) Preamble builder (preamble builder): Build a preamble-related symbol in frequency domain.

(8) Spatial mapper (spatial mapper): Map a space-time stream to a transmit chain. This operation can be performed per subcarrier basis.

(9) Training builder (training builder, TRN builder): Build a symbol related to a training field.

(10) Inverse discrete Fourier transform (inverse discrete Fourier transformation, IDFT): Apply inverse discrete Fourier transform to a subcarrier block.

(11) Guard interval (guard interval, GI) and window insertion: Insert a guard interval and window.

(12) Digital-to-analog converter (digital to analog converter, DAC) and radio frequency (radio frequency, RF): Perform digital-to-analog conversion and map a signal to a specified frequency and bandwidth for transmission.

It should be noted that the foregoing descriptions of the modules are simple examples for ease of understanding, and do not limit the protection scope of this application.

<u>3. Low-frequency segment parser</u>

In a low-frequency scenario, the segment parser may perform segment parsing on a bit stream. Specifically, the segment parser may divide the bit stream into a plurality of parallel outputs (or referred to as a plurality of data segments), and each output corresponds to one frequency domain subblock (frequency subblock). In other words, the bit stream is allocated to a plurality of frequency domain subblocks by the segment parser, or the segment parser may divide the bit stream into a plurality of outputs carried on subcarriers corresponding to the plurality of frequency domain subblocks. The following describes segment parsers in 802.11ax and 802.11be.

1. Segment parser in 802.11ax

Case 1: A size of a resource unit (resource unit, RU) is less than or equal to 996.

The RU may represent a resource unit allocated to a user. For example, an AP communicates with a STA, and data may be transmitted between the AP and the STA by using an allocated RU. The RU may include a plurality of subcarriers. The RU may be a 26-tone RU, a 52-tone RU, a 106-tone RU, a 242-tone RU, a 484-tone RU, a 996-tone RU, or the like. A tone represents a subcarrier. For example, the 996-tone RU represents an RU including 996 subcarriers. In case 1, if the size of the RU is less than or equal to 996, it indicates that a number of subcarriers included in the RU is less than or equal to 996.

In this case, a bandwidth corresponding to a frequency domain subblock is 80 MHz, and correspondingly, a number of subcarriers is 996. Therefore, if the size of the RU is less than or equal to 996, a bit stream corresponds to one output after passing through the segment parser, and the segment parser is equivalent to being bypassed (bypassed). For example, after the bit stream is input to the segment parser, output bits of the segment parser are $y_{k,l} = x_k$.

$x_k$ is a $k^{th}$ bit in coded bits of one OFDM symbol corresponding to the bit stream, where $0 \leq k \leq N_{CBPSS} - 1$. $N_{CBPSS}$ is a number of coded bits of one OFDM symbol. $l$ is an index number of a frequency domain subblock. $y_{k,l}$ is a $k^{th}$ bit of the frequency domain subblock $l$.

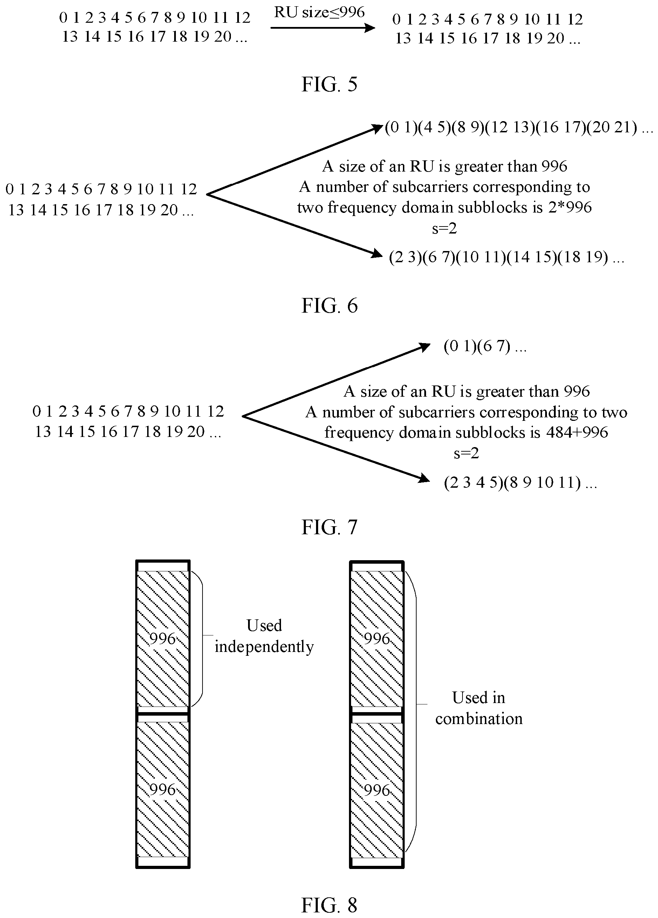

For example, FIG. 5 is a diagram of an output of the segment parser. As shown in FIG. 5, if the size of the RU is less than or equal to 996, after a bit stream (0 1 2 3 4 5 6 7 8 9 10 11 12 13 14 15 16 17 18 19 20 ...) is input to the segment parser, an output of the segment parser is: 0 1 2 3 4 5 6 7 8 9 10 11 12 13 14 15 16 17 18 19 20 .... The segment parser is equivalent to being bypassed.

Case 2: A size of an RU is greater than 996.

In case 2, if the size of the RU is greater than 996, it indicates that a number of subcarriers included in the RU is greater than 996.

In this case, a bandwidth corresponding to a frequency domain subblock is 80 MHz, and a number of subcarriers corresponding to the frequency domain subblock with the bandwidth of 80 MHz is 996. Therefore, if the size of the RU is greater than 996, a bit stream corresponds to a plurality of outputs after passing through the segment parser. That is, the bit stream is allocated to a plurality of frequency domain subblocks. For example, after the bit stream is input to the segment parser, output bits of the segment parser are $y_{k,l} = x_m$.

$x_m$ is an $m^{th}$ bit in coded bits of one OFDM symbol corresponding to the bit stream, where $0 \leq m \leq N_{CBPSS}$-1. $N_{CBPSS}$ is a number of coded bits of one OFDM symbol.

$$m = 2s \cdot \left\lfloor \frac{k}{s} \right\rfloor + l \cdot s + (k \bmod s) \quad \text{where} \quad k = 0, 1, \ldots, \frac{N_{CBPSS}}{2} - 1 \quad \text{and} \quad s = \max\left(1, \frac{N_{BPSCS}}{2}\right).$$

$l$ is an index number of a frequency domain subblock, and the index number of the frequency domain subblock may start from 0. $y_{k,l}$ is a $k^{th}$ bit of the frequency domain subblock $l$. $N_{BPSCS}$ is a number of coded bits per single subcarrier per spatial stream (number of coded bits per single carrier per spatial stream).

For example, FIG. 6 is another diagram of outputs of the segment parser. As shown in FIG. 6, if the size of the RU is greater than 996, it is assumed that s=2 corresponds to 16-quadrature amplitude modulation (quadrature amplitude modulation, QAM). After a bit stream (0 1 2 3 4 5 6 7 8 9 10 11 12 13 14 15 16 17 18 19 20 21 ...) is input to the segment parser, the segment parser corresponds to two outputs, respectively (0 1)(4 5)(8 9)(12 13)(16 17)(20 21) ..., and (2 3)(6 7)(10 11) (14 15)(18 19) ....

It can be learned from the foregoing that, when performing segment parsing, the segment parser in 802.11ax allocates the bit stream to one or two frequency domain subblocks at a granularity of 80 MHz. One frequency domain subblock corresponds to 996 subcarriers, and there are 980 data subcarriers in the 996 subcarriers. Two frequency domain subblocks correspond to 2×996 subcarriers (there are 2×980 data subcarriers in the 2×996 subcarriers).

2. Segment parser in 802.11be

Compared with the segment parser in 802.11ax, the segment parser in 802.11be is mainly modified in the following two aspects.

(1) A bandwidth changes from 160 MHz to 320 MHz. In this case, the segment parser can support allocating the bit stream to a maximum of four frequency domain subblocks at a granularity of 80 MHz. That is, there may be a maximum of four parallel outputs.
(2) A plurality of resource units (multi-RU, MRU) are introduced. That is, one user can be allocated a plurality of RUs at a time.

Parameters of the segment parser in 802.11be are shown in Table 5.

Table 5

| RU or MRU | RU order (RU order) low to high frequency (low to high frequency) | L | Is DCM used (Is DCM used)? | $m_0$ | $m_1$ | $m_2$ | $m_3$ | Leftover bits per fully occupied frequency domain subblock (leftover bits per fully occupied frequency domain subblock) |
|---|---|---|---|---|---|---|---|---|
| 996+484 | 484+996 | 2 | No | $s$ | $2s$ | | | $44 \times N_{BPSCS\_u}$ |
| | | | Yes | | | | | 22 |
| | 996+484 | | No | $2s$ | $s$ | | | $44 \times N_{BPSCS\_u}$ |
| | | | Yes | | | | | 22 |
| 996+484+242 | (242+484)+996 | | No | $3s$ | $4s$ | | | $44 \times N_{BPSCS\_u}$ |
| | | | Yes | | | | | 22 |
| | 996+(242+484) | | No | $4s$ | $3s$ | | | $44 \times N_{BPSCS\_u}$ |
| | | | Yes | | | | | 22 |
| 2×996+484 | 484+996+996 | 3 | No | $s$ | $2s$ | $2s$ | | $44 \times N_{BPSCS\_u}$ |
| | 996+484+996 | | No | $2s$ | $s$ | $2s$ | | $44 \times N_{BPSCS\_u}$ |
| | 996+996+484 | | No | $2s$ | $2s$ | $s$ | | $44 \times N_{BPSCS\_u}$ |

(continued)

| RU or MRU | RU order (RU order) low to high frequency (low to high frequency) | L | Is DCM used (Is DCM used)? | $m_0$ | $m_1$ | $m_2$ | $m_3$ | Leftover bits per fully occupied frequency domain subblock (leftover bits per fully occupied frequency domain subblock) |
|---|---|---|---|---|---|---|---|---|
| 3×996+484 | 484+996+996+996 | 4 | No | s | 2s | 2s | 2s | $44 \times N_{BPSCS\_u}$ |
| | 996+484+996+996 | | No | 2s | s | 2s | 2s | $44 \times N_{BPSCS\_u}$ |
| | 996+996+484+996 | | No | 2s | 2s | s | 2s | $44 \times N_{BPSCS\_u}$ |
| | 996+996+996+484 | | No | 2s | 2s | 2s | s | $44 \times N_{BPSCS\_u}$ |
| 2×996 | 996+996 | 2 | No | s | s | | | 0 |
| | | | Yes | | | | | |
| 3×996 | 996+996+996 | 3 | No | s | s | s | | 0 |
| | | | Yes | | | | | |
| 4×996 | 996+996+996+996 | 4 | No | s | s | s | s | 0 |
| | | | Yes | | | | | |

It can be learned from Table 5 that an output ratio of the segment parser in 802.11ax is s:s, and that an output ratio of the segment parser in 802.11be is another output ratio in addition to s:s of 2×996, s:s:s of 3×996, and s:s:s:s of 4×996. For example, a 484+996 tone MRU includes two output branches, and an output ratio of each output branch is s:2s. The output branch corresponds to the frequency domain subblock. In a low-frequency scenario, the output branch, the frequency domain subblock, and 80 MHz may be equivalent. Specifically, the segment parser may allocate the bit stream to each frequency domain subblock through an output branch corresponding to each frequency domain subblock.

In this embodiment of this application, the output ratio is mentioned a plurality of times. This is described herein, and details are not described below. The output ratio indicates a ratio of a quantity of bits corresponding to each output branch in one round. Two output branches are used as an example. If in one round, a quantity of bits corresponding to a first output branch is s, and a quantity of bits corresponding to a second output branch is 2s, an output ratio of the first output branch to the second output branch is s:2s. In other words, if an output ratio of the first output branch to the second output branch in one round is s:2s, in the round of outputs, a quantity of bits corresponding to the first output branch is s, and a quantity of bits corresponding to the second output branch is 2s. The following provides an example for description with reference to FIG. 7.

For example, FIG. 7 is another diagram of outputs of the segment parser. As shown in FIG. 7, it is assumed that s=2. The segment parser corresponds to two output branches, an output ratio of the two output branches is s:2s, and a bit stream input to the segment parser is: 0 1 2 3 4 5 6 7 8 9 10 11 12 13 14 15 16 17 18 19 20 .... In this case, in a first round of outputs, bits output by the first output branch are (0 1), and bits output by the second output branch are (2 3 4 5); in a second round of outputs, bits output by the first output branch are (6 7), and bits output by the second output branch are (8 9 10 11); and so on.

Table 5 further mentions leftover bits (leftover bits). The following uses a 484+996 tone MRU as an example to describe a concept of the leftover bits. A 484-tone RU corresponds to 468 data subcarriers, and a 996-tone RU corresponds to 980 data subcarriers, which are output in a ratio of s:2s. After the 484-tone RU completes outputting, the 996-tone RU correspondingly outputs 980-468*2=44 subcarriers. Therefore, the 996-tone RU correspondingly still has $44^{*}N_{BPSCS\_u}$ that are not output. A reason why the value is 22 in the case of dual-carrier modulation (dual carrier modulation, DCM) is also described above. In the DCM mode, every two subcarriers correspond to one bit, and therefore 44 subcarriers correspond to 22 bits.

4. Solutions of this application:

The foregoing separately describes segment parsers in 802.11ax and 802.11be. However, in the foregoing segment parsers, it is not considered that a newly added subcarrier may exist in a high-frequency scenario. Specific analysis is provided in the following with reference to two figures.

For example, FIG. 8 is a diagram of subcarrier usage manners in 802.11be. As shown in FIG. 8, assuming that a bandwidth corresponding to a frequency domain subblock in 802.11be is 80 MHz, a number of subcarriers corresponding to the frequency domain subblock is 996. Channels corresponding to frequency domain subblocks are relatively independent. In other words, if n frequency domain subblocks are used, a corresponding number of subcarriers is n×996. FIG. 8 is used as an example. When two frequency domain subblocks are used, a corresponding number of subcarriers is 2*996.

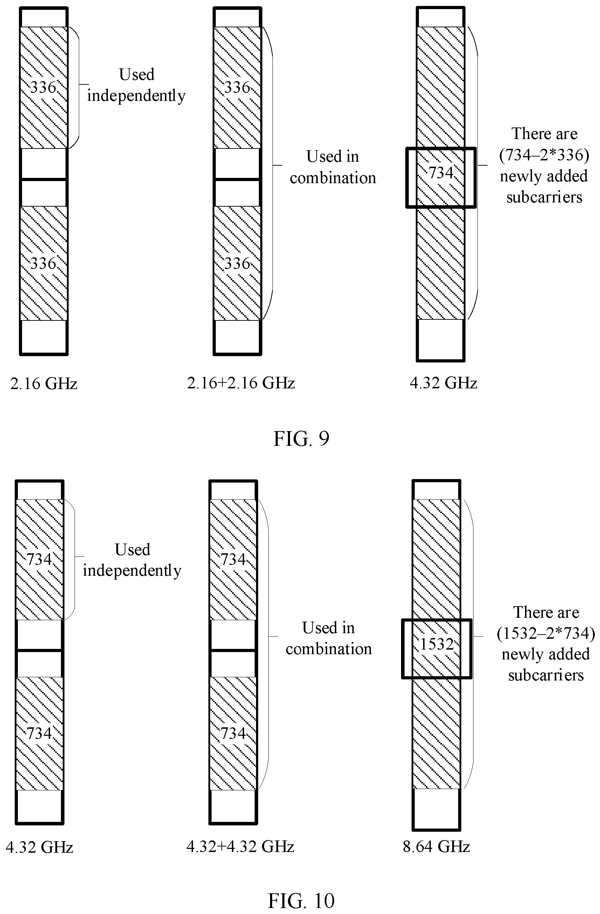

For example, FIG. 9 is a diagram of a 2.16 GHz channel, a 2.16+2.16 GHz channel, and a 4.32 GHz channel in 802.11ay. With reference to Table 4, it can be learned that the 4.32 GHz channel has 773-2*355=63 additional subcarriers (direct current subcarriers+data subcarriers+pilot subcarriers) compared with the 2.16+2.16 GHz channel. For data subcarriers, the 4.32 GHz channel has 734-336*2=734-672=62 additional data subcarriers compared with the 2.16+2.16 GHz channel. These additional subcarriers may be referred to as newly added subcarriers. It should be noted that the newly added subcarriers are newly added in the middle, and one subcarrier is removed from an edge in a non-aggregated state.

For example, FIG. 10 is a diagram of a 4.32 GHz channel, a 4.32+4.32 GHz channel, and an 8.64 GHz channel in 802.11ay. With reference to Table 4, it can be learned that the 8.64 GHz channel has 1611-2*773=65 additional subcarriers (direct current subcarriers+data subcarriers+pilot subcarriers) compared with the 4.32+4.32 GHz channel. For data subcarriers, the 8.64 GHz channel has 1532-734*2=64 additional data subcarriers compared with the 4.32+4.32 GHz channel. These additional subcarriers may be referred to as newly added subcarriers. It should be noted that the newly added subcarriers are newly added in the middle, and one subcarrier is removed from an edge in a non-aggregated state.

The foregoing provides two examples with reference to FIG. 9 and FIG. 10. This is not limited herein. Channel division in 802.11ay is used as an example. When a channel element is a 2.16 GHz channel, a newly added subcarrier exists in the following channels: (1) 4.32 GHz; (2) 6.48 GHz; (3) 8.64 GHz; and (4) 4.32+4.32 GHz. For example, when the channel element is a 4.32 GHz channel, a newly added subcarrier exists in the following channels: (1) 6.48 GHz; and (2) 8.64 GHz. In addition, when the channel element is a 2.16+2.16 GHz channel, a newly added subcarrier may also be designed between two channel elements. This is not limited. It may be understood that the newly added subcarrier is an additional subcarrier resulting from aggregation or non-aggregation between two channel elements. Whether the channel elements are in an aggregated state or a non-aggregated state for aggregation between the channel elements is not limited.

In the case of aggregation between the channel elements, a total number of subcarriers and a number of data subcarriers in the channel elements may slightly change. The following uses two channel elements #1 as an example for description.

For example, a total number of subcarriers in a channel element #1 in the aggregated state may slightly increase or decrease compared with that of a channel element #1 in the non-aggregated state.

For another example, most newly added subcarriers or data subcarriers are located between two aggregated channel elements #1. However, due to changes or adjustments of a pilot subcarrier, a direct current subcarrier, and the like, some data subcarriers (referred to as subcarriers #B for differentiation) may be further added in a frequency domain range of the channel element #1 in the non-aggregated state compared with the channel element #1 in the aggregated state. The subcarriers #B that appear in the frequency domain range of the channel element #1 may belong to a first frequency domain subblock (that is, the first frequency domain subblock described in the following embodiment) including the newly added subcarriers, and are output through an output branch corresponding to the first frequency domain subblock; or may belong to a second frequency domain subblock (that is, the first frequency domain subblock described in the following embodiment) and are output through an output branch corresponding to the second frequency domain subblock; or may have another design. This is not limited.

For another example, in a scenario of aggregation between channel elements #1, data subcarriers in the channel elements #1 may also be reduced.

When the segment parser is used in a high frequency scenario, existence of a newly added subcarrier needs to be considered.

This application provides a solution in which output bits of a stream parser are allocated to L frequency domain subblocks, the L frequency domain subblocks include a first frequency domain subblock, and the first frequency domain subblock includes a newly added subcarrier, to resolve a problem of allocating bits to the newly added subcarrier.

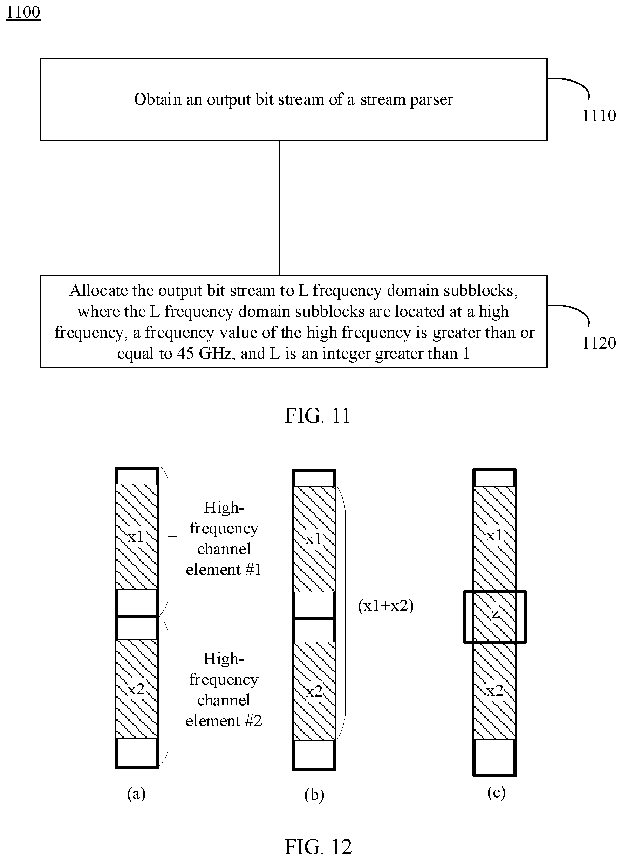

For example, FIG. 11 is a diagram of a communication method 1100 according to an embodiment of this application. The method 1100 may include the following steps.

1110: Obtain an output bit stream of a stream parser.

For example, coded bits are input to the stream parser, and at least one bit stream is output, where the at least one bit stream is input to a segment parser. For differentiation and ease of description, the bit stream output by the stream parser, that is, the bit stream input to the segment parser, is referred to as the output bit stream.

1120: Allocate the output bit stream to L frequency domain subblocks, where the L frequency domain subblocks are located at a high frequency, a frequency value of the high frequency is greater than or equal to 45 GHz, and L is an integer greater than 1.

The method 1100 is performed by a communication apparatus, or may be performed by a component (for example, a chip, a circuit, or a module) in a communication apparatus, for example, performed by a segment parser in the communication apparatus. The following describes the solution by using an example in which the segment parser performs the method. The segment parser in the following may be replaced with the communication apparatus.

That the L frequency domain subblocks are located at a high frequency (high frequency) may alternatively be replaced with that the segment parser is applied to a scenario in which a frequency value is greater than or equal to 45 GHz, or may alternatively be replaced with that the segment parser is applied to a high-frequency scenario. The high-frequency scenario may alternatively be replaced with a high-frequency standard.

A person skilled in the art should understand meanings of the high frequency. A high frequency may represent, for example, a frequency band whose frequency value is greater than 45 GHz, or for another example, a frequency band whose frequency value is greater than 56.16 GHz, for example, frequency values represented by channel indexes 0 to 16 shown in FIG. 2, that is, 57.24 GHz, 58.32 GHz, 59.4 GHz, 60.48 GHz, 61.56 GHz, 62.64 GHz, 63.72 GHz, 64.8 GHz, 65.88 GHz, 66.96 GHz, 68.04 GHz, 69.12 GHz, 70.2 GHz, 71.28 GHz, 72.36 GHz, 73.44 GHz, 74.52 GHz, and the like.

One frequency domain subblock may correspond to one output branch of the segment parser, and the L frequency domain subblocks may correspond to L output branches of the segment parser. For example, bandwidths corresponding to some of the L frequency domain subblocks may be 80 MHz, or bandwidths corresponding to some of the L frequency domain subblocks may be 320 MHz, or bandwidths corresponding to some of the L frequency domain subblocks may be 2.16 GHz. It may be understood that the foregoing is an example for description, and this is not limited. For example, bandwidths corresponding to some of the L frequency domain subblocks may be expanded based on a multiple of a 20 MHz channel granularity, for example, 20 MHz, 40 MHz, 80 MHz, 160 MHz, 320 MHz, 640 MHz, or 1280 MHz, or bandwidths corresponding to some of the L frequency domain subblocks may be expanded based on a multiple of a 2.16 GHz channel granularity, or bandwidths corresponding to some of the L frequency domain subblocks may be expanded based on another channel granularity.

It may be understood that in a low frequency, an output branch corresponding to a frequency domain subblock corresponds to a specific frequency band (for example, 80 MHz). In a high frequency, because of existence of a first subcarrier (that is, a newly added subcarrier), the foregoing correspondence may not be established. In this application, for ease of description, an example in which one frequency domain subblock corresponds to one output branch (or one output branch corresponds to one frequency domain subblock) is mainly used for description. A specific correspondence thereof does not limit the protection scope of this application. For example, a frequency domain subblock may also correspond to a frequency band. For another example, a frequency domain subblock may not be in a one-to-one relationship with an output branch. For example, one frequency domain subblock may correspond to a plurality of output branches.

That the segment parser allocates the output bit stream to the L frequency domain subblocks may alternatively be replaced with that the segment parser allocates the output bit stream to some or all subcarriers corresponding to the L frequency domain subblocks. For brevity, the following mainly uses the subcarriers corresponding to the frequency domain subblocks as an example for description. It may be understood that, that the segment parser allocates the output bit stream to the subcarriers corresponding to the L frequency domain subblocks may be that the segment parser allocates the output bit stream to some subcarriers corresponding to the L frequency domain subblocks, or may be that the segment parser allocates the output bit stream to all subcarriers corresponding to the L frequency domain subblocks.

In a possible case, after the coded bits are input to the stream parser, at least one output bit stream is output, and one output bit stream (referred to as an output bit stream #1 for differentiation) in the at least one output bit stream may be input to one segment parser corresponding to the output bit stream #1 for segment parsing. Specifically, the segment parser allocates the output bit stream #1 to the L frequency domain subblocks. Each of the at least one output bit stream may be input to a corresponding segment parser for segment parsing.

In another possible case, after the coded bits are input to the stream parser, at least one output bit stream is output, and the at least one output bit stream is input to one segment parser for segment parsing. Specifically, the segment parser allocates the at least one output bit stream to the L frequency domain subblocks.

Optionally, the L frequency domain subblocks include a first frequency domain subblock, the first frequency domain subblock includes a first subcarrier, and the first subcarrier is an additional subcarrier in a non-aggregated channel compared with an aggregated channel, or a subcarrier position (number) corresponding to the first subcarrier is an available subcarrier position in a non-aggregated channel, but is an unavailable subcarrier position in an aggregated channel. That the first frequency domain subblock includes the first subcarrier may alternatively be replaced with that the first frequency domain subblock corresponds to the first subcarrier.

Further optionally, the L frequency domain subblocks include a second frequency domain subblock, the second frequency domain subblock includes a second subcarrier, and the second subcarrier is not the first subcarrier, or a subcarrier position corresponding to the second subcarrier is an available subcarrier position in both the non-aggregated channel and the aggregated channel. For example, the second subcarrier is a subcarrier in the aggregated channel, for example, a part or all of subcarriers in the aggregated channel. That the second frequency domain subblock includes the second subcarrier may alternatively be replaced with that the second frequency domain subblock corresponds to the second subcarrier.

In this embodiment of this application, for differentiation, a frequency domain subblock including the first subcarrier is referred to as the first frequency domain subblock, and a frequency domain subblock not including the first subcarrier is referred to as the second frequency domain subblock. In addition, the first frequency domain subblock and the second frequency domain subblock are named for differentiation, and names of the first frequency domain subblock and the second frequency domain subblock do not limit the protection scope of embodiments of this application.

The first subcarrier is an additional subcarrier in the non-aggregated channel compared with the aggregated channel, and the first subcarrier is the newly added subcarrier described above, for example, the newly added subcarriers shown in FIG. 9 or FIG. 10.

In an example, the additional subcarrier in the non-aggregated channel compared with the aggregated channel may be an additional data subcarrier in the non-aggregated channel compared with the aggregated channel. FIG. 9 is used as an example. The non-aggregated channel is the 4.32 GHz channel, the aggregated channel is the 2.16+2.16 GHz channel, and the first subcarrier is an additional data subcarrier in the 4.32 GHz channel compared with the 2.16+2.16 GHz channel. FIG. 10 is used as another example. The non-aggregated channel is the 8.64 GHz channel, the aggregated channel is the 4.32+4.32 GHz channel, and the first subcarrier is an additional data subcarrier in the 8.64 GHz channel compared with the 4.32+4.32 GHz channel.

In another example, the additional subcarrier in the non-aggregated channel compared with the aggregated channel may be total subcarriers in the non-aggregated channel compared with the aggregated channel. FIG. 9 is used as an example. The non-aggregated channel is the 4.32 GHz channel, the aggregated channel is the 2.16+2.16 GHz channel, and the first subcarrier is additional total subcarriers in the 4.32 GHz channel compared with the 2.16+2.16 GHz channel, that is, a direct current subcarrier+a data subcarrier+a pilot subcarrier. FIG. 10 is used as another example. The non-aggregated channel is the 8.64 GHz channel, the aggregated channel is the 4.32+4.32 GHz channel, and the first subcarrier is additional total subcarriers in the 8.64 GHz channel compared with the 4.32+4.32 GHz channel, that is, a direct current subcarrier+a data subcarrier+a pilot subcarrier.

That the first subcarrier is the additional subcarrier in the non-aggregated channel compared with the aggregated channel may be replaced with, for example, that the first subcarrier is an additional subcarrier for non-aggregation between high-frequency channel elements compared with aggregation between the high-frequency channel elements. The high-frequency channel element may be, for example, the 2.16 GHz channel (or a channel expanded based on a multiple of a 2.16 GHz channel granularity), or may be the 4.32 GHz channel (or a channel expanded based on a multiple of a 4.32 GHz channel granularity), or may be the 6.48 GHz channel (or a channel expanded based on a multiple of a 6.48 GHz channel granularity), or may be the 8.64 GHz channel (or a channel expanded based on a multiple of an 8.64 GHz channel granularity), and the like. In an example, that the first subcarrier is the additional subcarrier for the non-aggregation between the high-frequency channel elements compared with the aggregation between the high-frequency channel elements may be that the first subcarrier is an additional subcarrier in a frequency domain range for the non-aggregation between the high-frequency channel elements compared with the aggregation between the high-frequency channel elements, for example, located in the middle. In another example, that the first subcarrier is the additional subcarrier for the non-aggregation between the high-frequency channel elements compared with the aggregation between the high-frequency channel elements may be that the first subcarrier is an additional subcarrier in any frequency domain range for the non-aggregation between the high-frequency channel elements compared with the aggregation between the high-frequency channel elements, for example, includes an additional subcarrier in a frequency domain range for the non-aggregation between the high-frequency channel elements compared with the aggregation between the high-frequency channel elements, and a newly added subcarrier (for example, the subcarrier #B described above) that is not in the frequency domain range. In the case of non-aggregation between the high-frequency channel elements, whether a high-frequency channel element is in an aggregated state or a non-aggregated state is not limited.

For ease of understanding, the following is mainly described by using an example in which the additional subcarrier for the non-aggregation between the high-frequency channel elements compared with the aggregation between the high-frequency channel elements is the first subcarrier. It may be understood that in the following, the non-aggregation between the high-frequency channel elements may be replaced with the non-aggregated channel, and the aggregation between the high-frequency channel elements may be replaced with the aggregated channel.

For differentiation and ease of description, the first subcarrier is referred to as a subcarrier #A below, and a plurality of subcarriers #A are referred to as one group of subcarriers, for example, a subcarrier group #A below. A meaning of the subcarrier group #A may be as follows: An additional subcarrier for non-aggregation between adjacent high-frequency channel elements compared with aggregation between the adjacent high-frequency channel elements may correspond to one subcarrier group #A, or a subcarrier at a channel boundary corresponding to the adjacent high-frequency channel elements may correspond to one subcarrier group #A, or a first subcarrier that is contiguous in frequency domain may correspond to one subcarrier group #A. In addition, for example, the first frequency domain subblock may include at least one subcarrier group #A.

For example, FIG. 12 is a diagram of a subcarrier group #A. As shown in (a) of FIG. 12, it is assumed that there are two high-frequency channel elements, which are respectively referred to as a high-frequency channel element #1 and a high-frequency channel element #2. In the case of aggregation between the high-frequency channel element #1 and the high-frequency channel element #2, a number of data subcarriers (that is, a shaded area) corresponding to the high-frequency channel element #1 is x1, and a number of data subcarriers (that is, a shaded area) corresponding to the high-frequency channel element #2 is x2. As shown in (b) of FIG. 12, a number of corresponding subcarriers for aggregation between the high-frequency channel element #1 and the high-frequency channel element #2 is x1+x2. As shown in (c) of FIG. 12, a number of corresponding subcarriers for non-aggregation between the high-frequency channel element #1 and the high-frequency channel element #2 is (x1+x2)+z. It can be learned from comparison between (b) and (c) of FIG. 12 that, a non-aggregated channel (that is, in the case of non-aggregation between high-frequency channel elements) has z additional subcarriers compared with an aggregated channel (that is, in the case of aggregation between the high-frequency channel elements), where the z subcarriers are z subcarriers #A, and the z subcarriers #A may be referred to as one subcarrier group #A.

(c) of FIG. 12 is used as an example. There is one first frequency domain subblock, that is, a frequency domain subblock including the z subcarriers #A (that is, the subcarrier group #A), and there are two second frequency domain subblocks, that is, a frequency domain subblock #1 (or a frequency domain subblock including the x1 subcarriers) corresponding to the high-frequency channel element #1 and a frequency domain subblock #2 (or a frequency domain subblock including the x2 subcarriers) corresponding to the high-frequency channel element #2. It can be learned that in the example shown in (c) of FIG. 12, L=3, L1=1, L2=2, and L frequency domain subblocks are respectively a frequency domain subblock #1, a frequency domain subblock #2, and a first frequency domain subblock including the z subcarriers #A.

It may be understood that values of x1 and x2 may be equal or unequal. This is not limited.

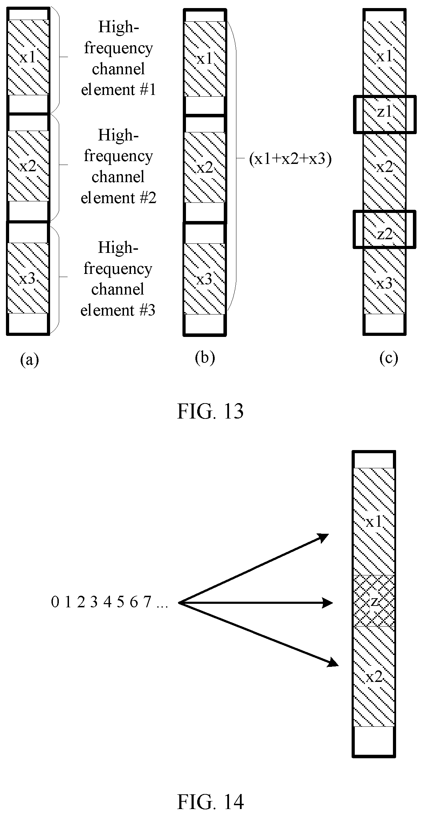

For example, FIG. 13 is another diagram of a subcarrier group #A. As shown in (a) of FIG. 13, it is assumed that there are three high-frequency channel elements, which are respectively denoted as a high-frequency channel element #1, a high-frequency channel element #2, and a high-frequency channel element #3. In the case of aggregation between the high-frequency channel element #1, the high-frequency channel element #2, and the high-frequency channel element #3, a number of data subcarriers (that is, a shaded area) corresponding to the high-frequency channel element #1 is x1, a number of data subcarriers (that is, a shaded area) corresponding to the high-frequency channel element #2 is x2, and a number of data subcarriers (that is, a shaded area) corresponding to the high-frequency channel element #3 is x3. As shown in (b) of FIG. 13, a number of subcarriers corresponding to an aggregated channel for aggregation between the high-frequency channel element #1, the high-frequency channel element #2, and the high-frequency channel element #3 is x1+x2+x3. As shown in (c) of FIG. 13, a number of subcarriers corresponding to a non-aggregated channel for non-aggregation between the high-frequency channel element #1, the high-frequency channel element #2, and the high-frequency channel element #3 is (x1+x2+x3)+z1+z2. It can be learned from comparison between (b) and (c) of FIG. 13 that, the non-aggregated channel (that is, in the case of non-aggregation between high-frequency channel elements) has (z1+z2) additional subcarriers compared with the aggregated channel (that is, in the case of aggregation between the high-frequency channel elements). The z1 subcarriers are z1 subcarriers #A, and the z1 subcarriers #A may be referred to as one subcarrier group #A. The z2 subcarriers are z2 subcarriers #A, and the z2 subcarriers #A may be referred to as one subcarrier group #A. In other words, in the example shown in (c) of FIG. 13, two subcarrier groups #A are included, that is, a subcarrier group #A corresponding to the z1 subcarriers #A and a subcarrier group #A corresponding to the z2 subcarriers #A.

(c) of FIG. 13 is used as an example. There are two first frequency domain subblocks, that is, a frequency domain subblock including the z1 subcarriers #A (that is, one subcarrier group #A), and a frequency domain subblock including the z2 subcarriers #A (that is, the other subcarrier group #A), and there are three second frequency domain subblocks, that is, a frequency domain subblock #1 (or a frequency domain subblock including the x1 subcarriers) corresponding to the high-frequency channel element #1, a frequency domain subblock #2 (or a frequency domain subblock including the x2 subcarriers) corresponding to the high-frequency channel element #2, and a frequency domain subblock #3 (or a frequency domain subblock including the x3 subcarriers) corresponding to the high-frequency channel element #3. It can be learned that in the example shown in (c) of FIG. 12, L=5, L1=2, L2=3, and L frequency domain subblocks are respectively a frequency domain subblock #1, a frequency domain subblock #2, a frequency domain subblock #3, one first frequency domain subblock including the z1 subcarriers #A, and the other first frequency domain subblock including the z2 subcarriers #A.

It may be understood that values of x1, x2, and x3 may be all equal, or may be partially equal, or may be completely different. This is not limited. Values of z1 and z2 may be equal or unequal. This is not limited.

It may be further understood that, in the example shown in (c) of FIG. 12 or (c) of FIG. 13, one subcarrier group #A corresponds to one first frequency domain subblock, or one first frequency domain subblock may be replaced with one subcarrier group #A.

The first frequency domain subblock may include designs of the following two solutions.

Solution 1: The first frequency domain subblock includes a subcarrier #A.

Optionally, in this solution, the L frequency domain subblocks may include at least one first frequency domain subblock and at least one second frequency domain subblock. In step 1120, the segment parser allocates the output bit stream to the at least one first frequency domain subblock and the at least one second frequency domain subblock.

The following describes two implementations applicable to Solution 1.

In a first possible implementation, one subcarrier group #A is one first frequency domain subblock, and one first frequency domain subblock corresponds to one output branch of the segment parser. Based on this implementation, each subcarrier group #A corresponds to one output branch of the segment parser.

Based on this implementation, assuming that there are Z subcarrier groups #A, the Z subcarrier groups #A correspond to Z first frequency domain subblocks, and the Z first frequency domain subblocks correspond to Z output branches of the segment parser, where each of the Z first frequency domain subblocks corresponds to one output branch of the segment parser.

For ease of understanding, the following describes the first possible implementation with reference to two examples.

Example 1: It is assumed that there are two second frequency domain subblocks, as shown in (c) of FIG. 12. In this example, the two second frequency domain subblocks correspond to one subcarrier group #A. Because one subcarrier group #A corresponds to one first frequency domain subblock, L=3. The L frequency domain subblocks include two second frequency domain subblocks and one first frequency domain subblock. The two second frequency domain subblocks correspond to two output branches, and the first frequency domain subblock (or the subcarrier group #A) corresponds to one output branch.

For example, FIG. 14 is a diagram of non-aggregation between two high-frequency channel elements. In the case of non-aggregation between the two high-frequency channel elements, there may be two second frequency domain subblocks and one first frequency domain subblock. For differentiation, the two second frequency domain subblocks are respectively referred to as a frequency domain subblock #1 and a frequency domain subblock #2. A number of data subcarriers corresponding to the frequency domain subblock #1 is x1, and a number of data subcarriers corresponding to the frequency domain subblock #2 is x2. As shown in FIG. 14, for a non-aggregated channel (that is, in the case of non-aggregation between the two high-frequency channel elements), because of existence of a subcarrier group #A (that is, one subcarrier group #A including z subcarriers #A), the two second frequency domain subblocks and the subcarrier group #A (that is, one first frequency domain subblock) correspond to three output branches. For differentiation, an output branch corresponding to the frequency domain subblock #1 is referred to as a first output branch, an output branch corresponding to the subcarrier group #A is referred to as a second output branch, and an output branch corresponding to the frequency domain subblock #2 is referred to as a third output branch.

For example, as shown in FIG. 14, after a bit stream (0 1 2 3 4 5 6 7 ...) is input to a segment parser, the segment parser allocates the bit stream to the frequency domain subblock #1, the frequency domain subblock #2, and the subcarrier group #A (that is, one first frequency domain subblock). Specifically, the segment parser outputs bits to subcarriers (that is, the x1 subcarriers) corresponding to the frequency domain subblock #1 through the first output branch, outputs bits to the subcarrier group #A (that is, the z subcarriers) through the second output branch, and outputs bits to subcarriers (that is, the x2 subcarriers) corresponding to the frequency domain subblock #2 through the third output branch. If each subcarrier corresponds to one bit, a final ratio of quantities of bits corresponding to the three output branches is x1:z:x2. Specific bits output by each output branch are described in detail below.

It may be understood that, in the case of aggregation between the high-frequency channel elements, because of absence of the subcarrier group #A, there are two frequency domain subblocks (that is, two second frequency domain subblocks), and the two frequency domain subblocks correspond to two output branches, that is, the first output branch corresponding to the frequency domain subblock #1 and the third output branch corresponding to the frequency domain subblock #2.

It may be further understood that in the example shown in FIG. 14, values of x1 and x2 may be equal or unequal. This is not limited.

Example 2: It is assumed that there are three high-frequency channel elements, as shown in (c) of FIG. 13. In this example, the three high-frequency channel elements correspond to two subcarrier groups #A. Because one subcarrier group #A corresponds to one first frequency domain subblock, L=5. The L frequency domain subblocks include three second frequency domain subblocks and two first frequency domain subblocks. The three second frequency domain subblocks correspond to three output branches, and the two first frequency domain subblocks (or the two subcarrier groups #A) correspond to two output branches.

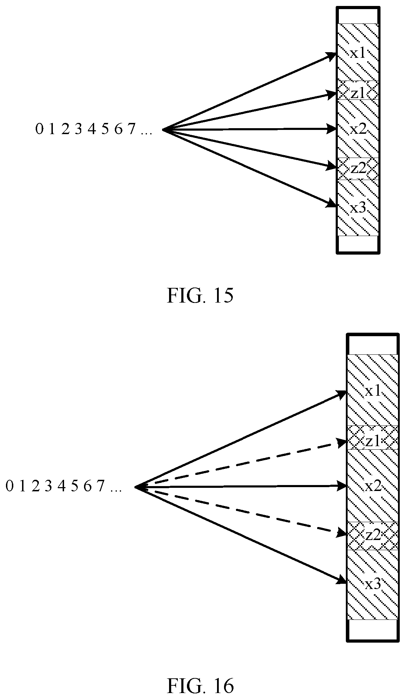

For example, FIG. 15 is a diagram of non-aggregation between three high-frequency channel elements. In the case of non-aggregation between the three high-frequency channel elements, there may be three second frequency domain subblocks and two first frequency domain subblocks. For differentiation, the three second frequency domain subblocks are respectively referred to as a frequency domain subblock #1, a frequency domain subblock #2, and a frequency domain subblock #3. A number of data subcarriers corresponding to the frequency domain subblock #1 is x1, a number of data subcarriers corresponding to the frequency domain subblock #2 is x2, and a number of data subcarriers corresponding to the frequency domain subblock #3 is x3. As shown in FIG. 15, for a non-aggregated channel (that is, in the case of non-aggregation between the three high-frequency channel elements), because of existence of subcarrier groups #A (that is, one subcarrier group #A including z1 subcarriers #A, and one subcarrier group #A including z2 subcarriers #A), the three second frequency domain subblocks and the two subcarrier groups #A (that is, two first frequency domain subblocks) correspond to five output branches. For differentiation, an output branch corresponding to the frequency domain subblock #1 is referred to as a first output branch, an output branch corresponding to the subcarrier group #A including the z1 subcarriers #A is referred to as a second output branch, an output branch corresponding to the frequency domain subblock #2 is referred to as a third output branch, an output branch corresponding to the subcarrier group #A including the z2 subcarriers #A is referred to as a fourth output branch, and an output branch corresponding to the frequency domain subblock #3 is referred to as a fifth output branch.

For example, as shown in FIG. 15, after a bit stream (0 1 2 3 4 5 6 7 ...) is input to a segment parser, the segment parser allocates the bit stream to the frequency domain subblock #1, the frequency domain subblock #2, the frequency domain subblock #3, and the subcarrier groups #A (that is, two first frequency domain subblocks). Specifically, the segment parser outputs bits to subcarriers (that is, the x1 subcarriers) corresponding to the frequency domain subblock #1 through the first output branch, outputs bits to the subcarrier group #A including the z1 subcarriers #A through the second output branch, outputs bits to subcarriers (that is, the x2 subcarriers) corresponding to the frequency domain subblock #2 through the third output branch, outputs bits to the subcarrier group #A including the z2 subcarriers #A through the fourth output branch, and outputs bits to subcarriers (that is, the x3 subcarriers) corresponding to the frequency domain subblock #3 through the fifth output branch. If each subcarrier corresponds to one bit, a final ratio of quantities of bits corresponding to the five output branches is $x1:z1:x2:z2:x3$.

It may be understood that, in the case of aggregation between the high-frequency channel elements, because of absence of the subcarrier groups #A, there are three frequency domain subblocks (that is, three second frequency domain subblocks), and the three frequency domain subblocks correspond to three output branches, that is, the first output branch corresponding to the frequency domain subblock #1, the third output branch corresponding to the frequency domain subblock #2, and the fifth output branch corresponding to the frequency domain subblock #3.

It may be further understood that values of x1, x2, and x3 may be all equal, or may be partially equal, or may be completely different. This is not limited. Values of z1 and z2 may be equal or unequal. This is not limited.

The foregoing separately describes cases of two high-frequency channel elements and three high-frequency channel elements with reference to Example 1 and Example 2. It may be understood that the foregoing is an example for description, and a quantity of high-frequency channel elements is not limited. For example, in the case of non-aggregation between four high-frequency channel elements, there may be four second frequency domain subblocks and three subcarrier groups #A (that is, three first frequency domain subblocks). Therefore, the four second frequency domain subblocks and the three subcarrier groups #A correspond to seven output branches in total.

In a second possible implementation, a plurality of subcarrier groups #A are one first frequency domain subblock, and one first frequency domain subblock corresponds to one output branch of the segment parser. Based on this implementation, the plurality of subcarrier groups #A correspond to one output branch of the segment parser.

Optionally, based on this implementation, subcarriers #A are not contiguous in frequency domain. In other words, the subcarriers #A forming the first frequency domain subblock are not contiguous in frequency domain. That the subcarriers #A are not contiguous in frequency domain may indicate that at least two of a plurality of subcarriers #A are not contiguous in frequency domain. Details are not described below. For example, the first frequency domain subblock may include the subcarriers #A that are not contiguous in frequency domain. In other words, the first frequency domain subblock may include at least two subcarrier groups #A, where subcarriers in each subcarrier group #A are contiguous in frequency domain, and the two subcarrier groups #A are not contiguous in frequency domain.

For ease of understanding, the following describes the second possible implementation with reference to one example.

It is assumed that there are three high-frequency channel elements, as shown in (c) of FIG. 13. In this example, the three high-frequency channel elements correspond to two subcarrier groups #A. Because a plurality of subcarrier groups #A correspond to one first frequency domain subblock, L=4, L1=1, and L2=3. That is, the L frequency domain subblocks include three second frequency domain subblocks corresponding to the three high-frequency channel elements and one first frequency domain subblock. The three second frequency domain subblocks correspond to three output branches, and the first frequency domain subblock (or the two subcarrier groups #A) corresponds to one output branch.

For example, FIG. 16 is another diagram of non-aggregation between three high-frequency channel elements. In the case of non-aggregation between the three high-frequency channel elements, there may be three second frequency domain subblocks and one first frequency domain subblock. For differentiation, the three second frequency domain subblocks are respectively referred to as a frequency domain subblock #1, a frequency domain subblock #2, and a frequency domain subblock #3. A number of data subcarriers corresponding to the frequency domain subblock #1 is x1, a number of data subcarriers corresponding to the frequency domain subblock #2 is x2, and a number of data subcarriers corresponding to the frequency domain subblock #3 is x3. As shown in FIG. 16, for a non-aggregated channel (that is, in the case of non-aggregation between the three high-frequency channel elements), because of existence of subcarrier groups #A (that is, one subcarrier group #A including z1 subcarriers #A, and one subcarrier group #A including z2 subcarriers #A), the three second frequency domain subblocks and the two subcarrier groups #A (that is, one first frequency domain subblock) correspond to four output branches. Subcarriers corresponding to the first frequency domain subblock include the z1 subcarriers #A and the z2 subcarriers #A, and the z1 subcarriers #A and the z2 subcarriers #A are not contiguous in frequency domain. For differentiation, an output branch corresponding to the frequency domain subblock #1 is referred to as a first output branch, an output branch corresponding to the first frequency domain subblock including the z1 subcarriers #A and the z2 subcarriers #A is referred to as a second output branch, an output branch corresponding to the frequency domain subblock #2 is referred to as a third output branch, and an output branch corresponding to the frequency domain subblock #3 is referred to as a fourth output branch.

For example, as shown in FIG. 16, after a bit stream (0 1 2 3 4 5 6 7 ...) is input to a segment parser, the segment parser allocates the bit stream to the frequency domain subblock #1, the frequency domain subblock #2, the frequency domain subblock #3, and the first frequency domain subblock including the z1 subcarriers #A and the z2 subcarriers #A. Specifically, the segment parser outputs bits to subcarriers (that is, the x1 subcarriers) corresponding to the frequency domain subblock #1 through the first output branch, outputs bits to the first frequency domain subblock including the z1 subcarriers #A and the z2 subcarriers #A through the second output branch, outputs bits to subcarriers (that is, the x2 subcarriers) corresponding to the frequency domain subblock #2 through the third output branch, and outputs bits to subcarriers (that is, the x3 subcarriers) corresponding to the frequency domain subblock #3 through the fourth output branch. If each subcarrier corresponds to one bit, a final ratio of quantities of bits corresponding to the four output branches is x1:(z1+z2):x2:x3.

It may be understood that, in the case of aggregation between the high-frequency channel elements, because of absence of the subcarrier groups #A, there are three frequency domain subblocks (that is, three second frequency domain subblocks), and the three frequency domain subblocks correspond to three output branches, that is, the first output branch corresponding to the frequency domain subblock #1, the third output branch corresponding to the frequency domain subblock #2, and the fourth output branch corresponding to the frequency domain subblock #3.

It may be further understood that values of x1, x2, and x3 may be all equal, or may be partially equal, or may be completely different. This is not limited. Values of z1 and z2 may be equal or unequal. This is not limited.

It may be further understood that the foregoing is described by using an example in which the output branch corresponding to the first frequency domain subblock including the z1 subcarriers #A and the z2 subcarriers #A is the second output branch. This is not limited herein. For example, the output branch corresponding to the first frequency domain subblock may alternatively be the first output branch, the third output branch, or the fourth output branch.

The foregoing describes a case of three high-frequency channel elements. It may be understood that the foregoing is an example for description, and a quantity of high-frequency channel elements is not limited. For example, in the case of non-aggregation between four high-frequency channel elements, there are four second frequency domain subblocks and three subcarrier groups #A, and the three subcarrier groups #A correspond to one first frequency domain subblock. Therefore, the four second frequency domain subblocks and the three subcarrier groups #A correspond to five output branches in total.

Solution 2: In addition to the first subcarrier, the first frequency domain subblock further includes a second subcarrier. For the second subcarrier, refer to the foregoing descriptions.

Specifically, the first frequency domain subblock includes a subcarrier #A and a second subcarrier (for example, a subcarrier in an aggregated channel).

Based on this solution, a maximum number of data subcarriers corresponding to the frequency domain subblock may be adjusted based on a number of subcarriers #A, so that an output branch of the segment parser does not need to be additionally added for the subcarrier #A.

Optionally, in this solution, the L frequency domain subblocks may include at least one first frequency domain subblock and at least one second frequency domain subblock. In step 1120, the segment parser allocates the output bit stream to the at least one first frequency domain subblock and the at least one second frequency domain subblock. Alternatively, optionally, in this solution, the L frequency domain subblocks may include L first frequency domain subblocks. In step 1120, the segment parser allocates the output bit stream to the L first frequency domain subblocks.

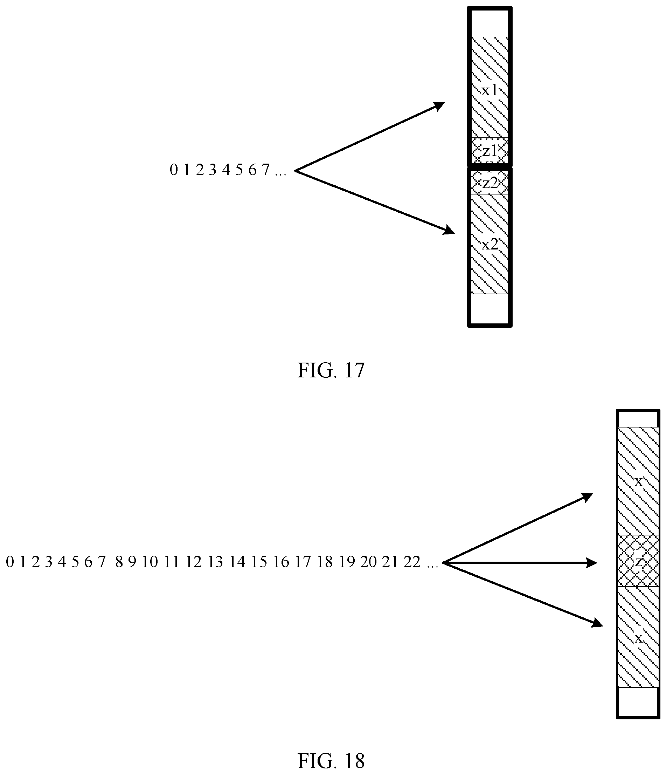

The following describes a specific example of Solution 2 with reference to FIG. 17.

For example, FIG. 17 is another diagram of non-aggregation between two high-frequency channel elements. In the case of non-aggregation between the two high-frequency channel elements, there may be two second frequency domain subblocks. For differentiation, the two second frequency domain subblocks are respectively referred to as a frequency domain subblock #1 and a frequency domain subblock #2. In the case of non-aggregation between the two high-frequency channel elements, a number of data subcarriers corresponding to the frequency domain subblock #1 is x1, and a number of data subcarriers corresponding to the frequency domain subblock #2 is x2. In the case of non-aggregation between the two high-frequency channel elements, there is one subcarrier group #A, and it is assumed that the subcarrier group #A includes z subcarriers #A. For differentiation, an output branch corresponding to the frequency domain subblock #1 is referred to as a first output branch, and an output branch corresponding to the frequency domain subblock #2 is referred to as a second output branch.

For example, as shown in FIG. 17, in the case of non-aggregation between the two high-frequency channel elements, the z subcarriers #A may be allocated to existing output branches. For example, z1 subcarriers #A in the subcarrier group #A are allocated to the first output branch corresponding to the frequency domain subblock #1, and z2 subcarriers #A in the subcarrier group #A are allocated to the second output branch corresponding to the frequency domain subblock #2. In this case, two first frequency domain subblocks are included, subcarriers corresponding to one first frequency domain subblock include the z1 subcarriers #A and the x1 subcarriers, and subcarriers corresponding to the other first frequency domain subblock include the z2 subcarriers #A and the x2 subcarriers. After a bit stream (0 1 2 3 4 5 6 7 ...) is input to a segment parser, the segment parser allocates the bit stream to the two first frequency domain subblocks. Specifically, the segment parser outputs, through the first output branch, bits to one first frequency domain subblock including the x1 subcarriers and the z1 subcarriers #A, and the segment parser outputs, through the second output branch, bits to the other first frequency domain subblock including the x2 subcarriers and the z2 subcarriers #A. z1 and z2 are integers greater than or equal to 0, and z1+z2=z. In a possible implementation, z1 is equal to or approximately equal to z2.

It may be understood that in the example shown in FIG. 17, L=2, and L frequency domain subblocks are respectively a first frequency domain subblock including the x1 subcarriers and the z1 subcarriers #A, and a first frequency domain subblock including the x2 subcarriers and the z2 subcarriers #A.

Because of addition of the first subcarrier (that is, a newly added subcarrier), a number of subcarriers (for example, a data subcarrier, or total subcarriers (that is, a direct current subcarrier+a data subcarrier+a pilot subcarrier)) corresponding to the frequency domain subblocks may change. The following uses the data subcarrier as an example to describe three manners of a maximum number of data subcarriers corresponding to the frequency domain subblocks.

Manner 1: For an aggregated channel (that is, aggregation between high-frequency channel elements) and a non-aggregated channel (that is, non-aggregation between high-frequency channel elements), maximum numbers of data subcarriers supported by frequency domain subblocks are different.

For example, a maximum number of data subcarriers supported by a frequency domain subblock in the case of aggregation between the high-frequency channel elements is a, and a maximum number of data subcarriers supported by a frequency domain subblock in the case of non-aggregation between the high-frequency channel elements is a+t. t is an integer greater than or equal to 1.

A specific value of t is not limited. For example, in the example shown in FIG. 17, $t=\left\lfloor \dfrac{z}{2} \right\rfloor$, or $t=\left\lceil \dfrac{z}{2} \right\rceil$. $\lfloor \ \rfloor$ represents rounding down, and $\lceil \ \rceil$ represents rounding up. It may be understood that another rounding manner may alternatively be used. This is not limited herein.

It may be understood that the foregoing example is described by using an example in which maximum numbers of supported data subcarriers in the case of aggregation and non-aggregation between the high-frequency channel elements are different. This is not limited herein. For example, maximum numbers of supported data subcarriers may alternatively be different in the case of aggregation and non-aggregation between some high-frequency channel elements.

Manner 2: A maximum number of data subcarriers supported by frequency domain subblocks is a+t.

Based on Manner 2, regardless of aggregation or non-aggregation between high-frequency channel elements, a maximum number of data subcarriers supported by frequency domain subblocks is x+t.

Manner 3: A maximum number of data subcarriers supported by frequency domain subblocks is related to channel bandwidths corresponding to the frequency domain subblocks and/or subcarrier spacings.

For example, a channel corresponding to a frequency domain subblock #1 is a channel #1, and a maximum number of data subcarriers supported by the frequency domain subblock #1 is equal to a total number of data subcarriers, pilot subcarriers, and direct current subcarriers on the channel #1.

For example, when a channel bandwidth corresponding to the frequency domain subblock is 20 MHz and a subcarrier spacing is 78.125 kHz, a maximum number of data subcarriers supported by the frequency domain subblock is 256.

For another example, when the channel bandwidth corresponding to the frequency domain subblock is 20 MHz and the subcarrier spacing is 321.5 kHz, the maximum number of data subcarriers supported by the frequency domain subblock is 264.

The following describes specific implementation of the segment parser. The following implementations may be used in combination with Solution 1 and Solution 2, or may be used independently.

Optionally, the segment parser allocates an output bit stream to L frequency domain subblocks in a cyclic polling manner, and a quantity of output bits in each round meets the following formula 1:

$$S_i = N_i \cdot s$$

<div align="right">Formula 1</div>

$S_i$ is a quantity of output bits allocated to an $i^{th}$ frequency domain subblock in one round, $N_i$ is a positive integer obtained by rounding a quotient of a number of subcarriers included in the $i^{th}$ frequency domain subblock and a preset number of subcarriers, and s is an integer greater than 0. The preset number of subcarriers may be a predefined number of subcarriers. Table 5 is used as an example. For example, when an MRU is "994+484", the preset number of subcarriers may be 484. For another example, when an MRU is "996+484+242", the preset number of subcarriers may be 242. A specific rounding manner is not limited. For example, a rounding-down manner may be used, or a rounding-off manner may be used.

For example, $s = \max\left(1, \dfrac{N_{BPSCS}}{2}\right)$, and $N_{BPSCS}$ is a quantity of coded bits corresponding to one subcarrier in one stream. It should be noted that a specific value and a specific definition of s are not limited in embodiments of this application.

FIG. 7 is used as an example. A bit stream input to the segment parser is: 0 1 2 3 4 5 6 7 8 9 10 11 12 13 14 15 16 17 18 19 20 .... In this case, in a first round of outputs, bits output by the first output branch are (0 1), and bits output by the second output branch are (2 3 4 5); in a second round of outputs, bits output by the first output branch are (6 7), and bits output by the second output branch are (8 9 10 11); and so on.

The following describes two possible implementations of the segment parser. The following manners may be used in combination with the foregoing cyclic polling manner.

Based on the foregoing cyclic polling manner, in a possible implementation, each output branch performs outputting once in each round of outputs. In another possible implementation, each output branch performs outputting at least twice in each round of outputs. The following describes the two manners in detail.

In a first possible implementation, each output branch performs outputting once in each round of outputs.

The first possible implementation in Solution 1 is used as an example (an example shown in FIG. 14). For example, a number of subcarriers #A included in a first frequency domain subblock is z, and corresponding numbers of subcarriers (that is, data of second subcarriers) for aggregation between two second frequency domain subblocks are respectively x1 and x2. Quantities of bits of the output bit stream allocated by the segment parser to the first frequency domain subblock and the two second frequency domain subblocks in at least one round are respectively s, $N_1$s, and $N_2$s.

$N_1 = \left\lfloor \dfrac{x_1}{z} \right\rfloor$, and $N_2 = \left\lfloor \dfrac{x_2}{z} \right\rfloor$. In other words, in at least one round, an output ratio of output branches corresponding to the first frequency domain subblock and the two second frequency domain subblocks is s:$N_1$s:$N_2$s. The at least one round may alternatively be each round, or may be a partial round. This is not limited.

The second possible implementation in Solution 1 is used as an example (an example shown in FIG. 16). For example, a number of subcarriers #A included in a first frequency domain subblock is (z1+z2), and corresponding numbers of subcarriers (that is, data of second subcarriers) for aggregation between two second frequency domain subblocks are respectively x1 and x2. Quantities of bits of the output bit stream allocated by the segment parser to the first frequency domain subblock and the two second frequency domain subblocks in at least one round are respectively s, $N_1$s, and $N_2$s.

$N_1 = \left\lfloor \dfrac{x_1}{z_1 + z_2} \right\rfloor$, and $N_2 = \left\lfloor \dfrac{x_2}{z_1 + z_2} \right\rfloor$. In other words, in at least one round, an output ratio of output branches corresponding to the first frequency domain subblock and the two second frequency domain subblocks is s:$N_1$s:$N_2$s. The at least one round may alternatively be each round, or may be a partial round. This is not limited.

For example, after the bit stream is input to the segment parser, output bits of the segment parser are $y_{k,l} = x_m$.

k is a bit number corresponding to a frequency domain subblock $l$ (excluding leftover bits), and usually starts from 0. $l$ is a number for a frequency domain subblock, and usually starts from 0 and ends with L-1, that is, $l$ = [0, $L$ - 1]. m is a bit number of a stream, and usually starts from 0.

Based on the first possible implementation, for example, m meets formula 2.

$$m = \left( \sum_{i=0}^{L-1} m_i \right) \cdot \left\lfloor \frac{k}{m_l} \right\rfloor + \sum_{i=0}^{l-1} m_i + \left( k \bmod m_l \right)$$

<div align="right">Formula 2</div>

$m_i$ and $m_l$ represent quantities of bits corresponding to frequency domain subblocks *i* and *l* in each round of outputs (or quantities of bits output by each output branch for the frequency domain subblocks in each round of outputs).

It should be noted that formula 2 is a possible example, and a variant formula belonging to formula 2 is also applicable to embodiments of this application.

For example, FIG. 18 is another diagram of non-aggregation between two high-frequency channel elements. In the case of non-aggregation between the two high-frequency channel elements, there may be two second frequency domain subblocks and one first frequency domain subblock. For differentiation, the two second frequency domain subblocks are respectively referred to as a frequency domain subblock #1 and a frequency domain subblock #2. A number of data subcarriers corresponding to the frequency domain subblock #1 is x, and a number of data subcarriers corresponding to the frequency domain subblock #2 is x. As shown in FIG. 18, for a non-aggregated channel (that is, in the case of non-aggregation between the two second frequency domain subblocks), there is one subcarrier group #A (that is, one first frequency domain subblock), and a number of subcarriers included in the subcarrier group #A is z. It is assumed that the frequency domain subblock #1, the frequency domain subblock #2, and the subcarrier group #A correspond to three output branches. For differentiation, an output branch corresponding to the frequency domain subblock #1 is referred to as a first output branch, an output branch corresponding to the subcarrier group #A is referred to as a second output branch, and an output branch corresponding to the frequency domain subblock #2 is referred to as a third output branch.

It is assumed that w=a number of subcarriers corresponding to the second frequency domain subblocks/a number of subcarriers corresponding to the first frequency domain subblock≈5 (for example, 5 is obtained by rounding down a quotient of the number of subcarriers corresponding to the second frequency domain subblocks and the number of subcarriers corresponding to the first frequency domain subblock). Therefore, an output ratio corresponding to the output branches may be 5s:1s:5s. That is, each output branch may be output according to 5s:1s:5s. s=1 is used as an example. For example, in a first round of outputs, bits (0 1 2 3 4) are output to the subcarriers corresponding to the frequency domain subblock #1 through the first output branch, a bit (5) is output to the subcarrier group #A through the second output branch, and bits (6 7 8 9 10) are output to the subcarriers corresponding to the frequency domain subblock #2 through the third output branch. In a second round of outputs, bits (11 12 13 14 15) are output to the subcarriers corresponding to the frequency domain subblock #1 through the first output branch, a bit (16) is output to the subcarrier group #A through the second output branch, and bits (17 18 19 20 21) are output to the subcarriers corresponding to the frequency domain subblock #2 through the third output branch, and so on, so that leftover bits are finally output.

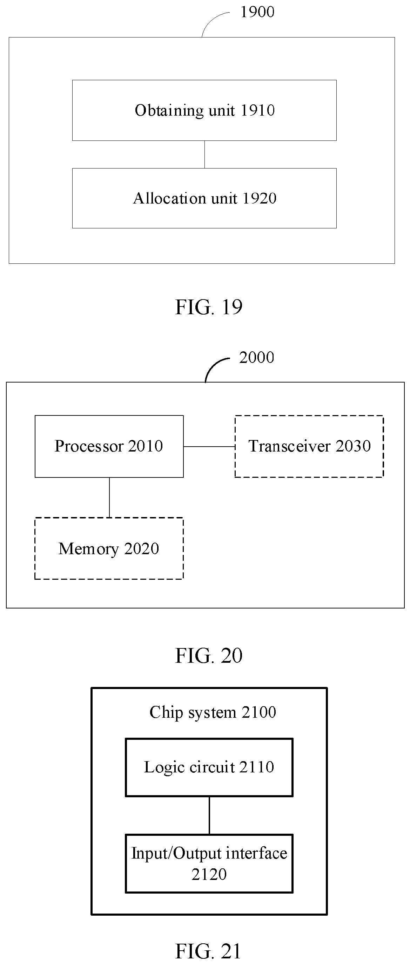

In a second possible implementation, when each output branch performs outputting in each round of outputs, at least one output branch performs outputting at least twice. Based on this, in at least one round of allocating the output bit stream by the segment parser to the L frequency domain subblocks in the cyclic polling manner, bits allocated by the segment parser to one frequency domain subblock (or at least one frequency domain subblock) of the L frequency domain subblocks are a result of being allocated at least twice. In other words, bits allocated by the segment parser to one frequency domain subblock in one round are not obtained in a single output, but rather are obtained in batches or in distributed outputs. In this way, the bits output to the frequency domain subblock may be more dispersed. Details are described in the following with reference to an example shown in FIG. 19.

The first possible implementation in Solution 1 is used as an example (an example shown in FIG. 14). For example, a number of subcarriers #A included in a first frequency domain subblock is z, and corresponding numbers of subcarriers (that is, data of second subcarriers) for aggregation between two second frequency domain subblocks are respectively x1 and x2. Quantities of bits of the output bit stream allocated by the segment parser to the first frequency domain subblock and the two second frequency domain subblocks in at least one round are respectively s, $N_1$s, and $N_2$s.

$$N_1 = \left\lfloor \frac{x_1}{z} \right\rfloor, \text{ and } N_2 = \left\lfloor \frac{x_2}{z} \right\rfloor.$$ In one round of cyclic polling, bits allocated by the segment parser to one first frequency domain subblock are obtained through one output, bits allocated by the segment parser to one second frequency domain subblock in the round are obtained through w1 outputs, and bits allocated by the segment parser to the other second frequency domain subblock in the round are obtained through w2 outputs. w1 is an integer greater than 0 and less than or equal to $N_1$, and w2 is an integer greater than 0 and less than or equal to $N_2$.

The second possible implementation in Solution 1 is used as an example (an example shown in FIG. 16). For example, a number of subcarriers #A included in a first frequency domain subblock is (z1+z2), and corresponding numbers of subcarriers (that is, data of second subcarriers) for aggregation between two second frequency domain subblocks are respectively x1 and x2. Quantities of bits of the output bit stream allocated by the segment parser to the first frequency domain subblock and the two second frequency domain subblocks in at least one round are respectively s, $N_1$s, and $N_2$s.

$$N_1 = \left\lfloor \frac{x_1}{z_1 + z_2} \right\rfloor, \text{ and } N_2 = \left\lfloor \frac{x_2}{z_1 + z_2} \right\rfloor.$$ In one round of cyclic polling, bits allocated by the segment parser to one first frequency domain subblock are obtained through one output, bits allocated by the segment parser to one second frequency domain subblock in the round are obtained through w1 outputs, and bits allocated by the segment parser to the other second frequency domain subblock in the round are obtained through w2 outputs. w1 is an integer greater than 0 and less than or equal to $N_1$, and w2 is an integer greater than 0 and less than or equal to $N_2$.

For example, after the bit stream is input to the segment parser, output bits of the segment parser are $y_{k,l} = X_m$. For meanings of the parameters, refer to the foregoing descriptions.

Based on the second possible implementation, that is, outputting $w_1$ times is completed in each round, for example, m meets formula 3.

$$m = \left(\sum_{i=0}^{S-1} p_i\right) \cdot \left\lfloor \frac{k}{p_j} \right\rfloor + \sum_{i=0}^{l-1} p_i + \left(k \bmod p_j\right)$$

Formula 3

S is an output included in all frequency domain subblocks, and $S = \sum_{l=0}^{L-1} w_l$. $p_i$ and $p_j$ correspond to one frequency domain subblock. $p_j$ indicates a quantity of bits output at a time in one round. It may be understood that in each round of outputs, bits on each frequency domain subblock are completed through $w_l$ outputs, that is, the bits on each frequency domain subblock are not obtained through continuous outputs or through one output. For example, in a first output of one round, bits are output to two second frequency domain subblocks through two output branches; then in a second output of the round, bits are output to the two second frequency domain subblocks through two output branches again; then in a third output of the round, bits are output to the two second frequency domain subblocks through two output branches again, and so on. It can be learned from the foregoing that the bits on each frequency domain subblock are not obtained through continuous outputs or through one output, but rather are obtained through cyclic outputs in batches. Specifically, the following provides descriptions with reference to two examples.

It should be noted that formula 3 is a possible example, and a variant formula belonging to formula 3 is also applicable to embodiments of this application.

In an example, FIG. 18 is used as an example. In each round of outputs, both the first output branch and the third output branch perform outputting five times (that is, w1=w2=w), and the second output branch performs outputting once. In other words, each time the second output branch performs outputting once, both the first output branch and the third output branch perform outputting five times. s=1 is used as an example. For example, in a first output of a first round, a bit (0) is output to the subcarriers corresponding to the frequency domain subblock #1 through the first output branch, and a bit (1) is output to the subcarriers corresponding to the frequency domain subblock #2 through the third output branch. In a second output of the first round, a bit (2) is output to the subcarriers corresponding to the frequency domain subblock #1 through the first output branch, and a bit (3) is output to the subcarriers corresponding to the frequency domain subblock #2 through the third output branch. In a third output of the first round, a bit (4) is output to the subcarriers corresponding to the frequency domain subblock #1 through the first output branch, and a bit (5) is output to the subcarriers corresponding to the frequency domain subblock #2 through the third output branch. In a fourth output of the first round, a bit (6) is output to the subcarriers corresponding to the frequency domain subblock #1 through the first output branch, and a bit (7) is output to the subcarriers corresponding to the frequency domain subblock #2 through the third output branch. In a fifth output of the first round, a bit (8) is output to the subcarriers corresponding to the frequency domain subblock #1 through the first output branch, a bit (9) is output to the subcarriers corresponding to the frequency domain subblock #2 through the third output branch, and a bit (10) is output to the subcarrier group #A through the second output branch, and so on, so that leftover bits are finally output.

In another example, FIG. 18 is used as an example. In each round of outputs, both the first output branch and the third output branch perform outputting twice (that is, w1=w2=2), and the second output branch performs outputting once. In other words, each time the second output branch performs outputting once, both the first output branch and the third output branch perform outputting twice. s=1 is used as an example. For example, in a first output of a first round, bits (0 1) are output to the subcarriers corresponding to the frequency domain subblock #1 through the first output branch, and bits (2 3) are output to the subcarriers corresponding to the frequency domain subblock #2 through the third output branch. In a second output of the first round, bits (4 5 6) are output to the subcarriers corresponding to the frequency domain subblock #1 through the first output branch, bits (7, 8, 9) are output to the subcarriers corresponding to the frequency domain subblock #2 through the third output branch, and a bit (10) is output to the subcarrier group #A through the second output branch. In a first output of a second round, bits (11 12) are output to the subcarriers corresponding to the frequency domain subblock #1 through the first output branch, and bits (13 14) are output to the subcarriers corresponding to the frequency domain subblock #2 through the third output branch. In a second output of the second round, bits (15 16 17) are output to the subcarriers corresponding to the frequency domain subblock #1 through the first output branch, bits (18 19 20) are output to the subcarriers corresponding to the frequency domain subblock #2 through the third output branch, and a bit (21) is output to the subcarrier group #A through the second output branch, and so on, so that leftover bits are finally output.

It may be understood that the foregoing mainly uses an example in which a bit on the subcarrier group #A is in a last output of each round of outputs for description. This is not limited herein. For example, the bit on the subcarrier group #A may be in a first output of each round, or in a second output of each round, or in a third output of each round, or in a fourth output of each round.

It may be further understood that in the foregoing two examples, w1=w2 is mainly used as an example for description. This is not limited herein. For example, w1 may alternatively not be equal to w2.

It may be further understood that in the second possible implementation, description is mainly provided by using an example in which a quantity of bits output each time through each output branch in each round of outputs is not directly output according to an output ratio. This is not limited herein. For example, a quantity of bits output each time through each output branch in at least one round may not be directly output according to an output ratio. For another example, a quantity of bits output each time through at least one output branch is not directly output according to an output ratio.

It may be further understood that in the second possible implementation, that a quantity of bits output each time through each output branch may not be directly output according to an output ratio is mainly described. Any variation of the foregoing manner is applicable to embodiments of this application.

It may be further understood that the foregoing second possible implementation may alternatively be used independently. An example shown in FIG. 7 is used as an example. If there are two output branches, and an output ratio of the two output branches is s:2s, in each round of outputs, a second output branch may perform outputting twice, and the first output branch performs outputting once.

It may be further understood that in an output process according to the foregoing two implementations, if there are leftover bits, for processing of the leftover bits, refer to an existing manner. This is not limited.

Optionally, each of the L frequency domain subblocks corresponds to one interleaver, and the interleaver is configured to interleave bits allocated to a corresponding frequency domain subblock. The following enumerates several implementations.

In a first possible implementation, one subcarrier group #A may be considered as one first frequency domain subblock, each first frequency domain subblock corresponds to one interleaver, and the interleaver is configured to reorder bits carried on a corresponding first frequency domain subblock. Based on this implementation, each subcarrier group #A corresponds to one interleaver, and the interleaver is configured to reorder bits on a corresponding subcarrier group #A.

For example, it is assumed that there are two subcarrier groups #A, which are respectively denoted as a subcarrier group #A1 and a subcarrier group #A2. An interleaver corresponding to the subcarrier group #A1 is referred to as an interleaver #1, and an interleaver corresponding to the subcarrier group #A2 is referred to as an interleaver #2. The interleaver #1 is configured to reorder bits carried on the subcarrier group #A1, and the interleaver #2 is configured to reorder bits carried on the subcarrier group #A2.

In addition, in this implementation, each second frequency domain subblock corresponds to one interleaver, and the interleaver is configured to reorder bits on a corresponding frequency domain subblock. Details are not described herein again.

In a second possible implementation, a plurality of subcarrier groups #A may be considered as one first frequency domain subblock, each first frequency domain subblock corresponds to one interleaver, and the interleaver is configured to reorder bits carried on a corresponding first frequency domain subblock. Based on this implementation, a plurality of subcarrier groups #A correspond to one interleaver, and the interleaver is configured to reorder bits on a plurality of corresponding subcarrier groups #A.

For example, it is assumed that there are two subcarrier groups #A, which are respectively denoted as a subcarrier group #A1 and a subcarrier group #A2. An interleaver corresponding to the subcarrier group #A1 and the subcarrier group #A2 is referred to as an interleaver #1, and the interleaver #1 is configured to reorder bits on the subcarrier group #A1 and the subcarrier group #A2.

In addition, in this implementation, each second frequency domain subblock corresponds to one interleaver, and the interleaver is configured to reorder bits on a corresponding frequency domain subblock. Details are not described herein again.

In a third possible implementation, in addition to the first subcarrier, the first frequency domain subblock further includes subcarriers in an aggregated channel, each first frequency domain subblock corresponds to one interleaver, and the interleaver is configured to reorder bits carried on a corresponding first frequency domain subblock.

For example, FIG. 17 is used as an example. z1 subcarriers in the subcarrier group #A are allocated to the first output branch corresponding to the frequency domain subblock #1, and z2 subcarriers in the subcarrier group #A are allocated to the second output branch corresponding to the frequency domain subblock #2. The subcarriers and the z1 subcarriers corresponding to the frequency domain subblock #1 correspond to one interleaver (for example, referred to as an interleaver #1), and the interleaver #1 is configured to reorder bits carried on the subcarriers and the z1 subcarriers corresponding to the frequency domain subblock #1. The subcarriers and the z2 subcarriers corresponding to the frequency domain subblock #2 correspond to one interleaver (for example, referred to as an interleaver #2), and the interleaver #2 is configured to reorder bits carried on the subcarriers and the z2 subcarriers corresponding to the frequency domain subblock #2.

The foregoing three possible implementations are examples for description, and this is not limited herein. For example, as long as a range of the interleaver is bound to a range of an output branch, that is, the interleaver reorders data bits corresponding to each output branch, any possible implementations apply to embodiments of this application.

It may be further understood that some optional features in embodiments of this application may be independent of other features in some scenarios, or may be combined with other features in some scenarios. This is not limited.

It may be further understood that at least one in this application indicates one or more, and "a plurality of" means two or more. The term "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects. In addition, it should be understood that although the terms first, second, and the like may be used in this application to describe objects, these objects are not limited by these terms. These terms are merely used to distinguish the objects from each other.

It may be further understood that in the foregoing embodiments, the segment parser is mainly used as an example for description. It may be understood that a name thereof does not limit the protection scope of embodiments of this application.

It may be further understood that in embodiments of this application, sequence numbers of output branches are merely names for differentiation, and do not limit the protection scope of embodiments of this application. In addition, an output sequence corresponding to each output branch is not limited in embodiments of this application.

It may be further understood that in embodiments of this application, specific descriptions of subcarriers are not limited. For example, in some of the foregoing embodiments, specific descriptions of the listed subcarriers are merely examples, and specific values of the subcarriers do not limit the protection scope of embodiments of this application.

It may be further understood that in embodiments of this application, in the case of non-aggregation and aggregation between high-frequency channel elements, subcarriers corresponding to the high-frequency channel elements may change. For example, in the case of non-aggregation between the high-frequency channel elements, because of existence of a subcarrier #A, subcarriers corresponding to the high-frequency channel elements may change. For example, some subcarriers (for example, one subcarrier) may be reduced at an edge.

It may be further understood that in embodiments of this application, aggregation between high-frequency channel elements and non-aggregation between the high-frequency channel elements are mentioned a plurality of times, and a person skilled in the art should understand meanings of the aggregation and the non-aggregation. The aggregation between the high-frequency channel elements may alternatively be replaced with an aggregated channel, and the non-aggregation between the high-frequency channel elements may alternatively be replaced with a non-aggregated channel.

It may be further understood that the solutions in embodiments of this application may be appropriately combined for use, and explanations or descriptions of terms in embodiments may be mutually referenced or explained in embodiments. This is not limited.

It may be further understood that in the foregoing method embodiments, the method and the operation implemented by the communication apparatus may alternatively be implemented by a constituent component (such as a chip or a circuit) of the communication apparatus. This is not limited.

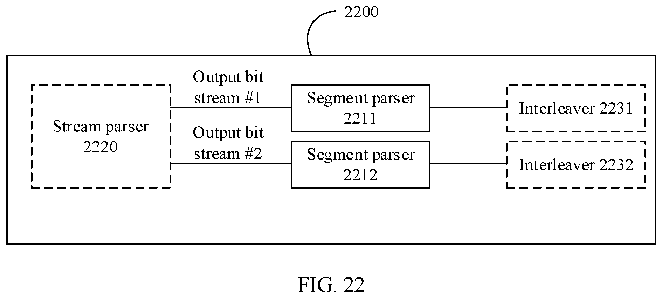

The foregoing describes in detail the methods provided in embodiments of this application with reference to FIG. 11 to FIG. 18. The following describes apparatuses provided in embodiments of this application with reference to FIG. 19 and FIG. 22. It should be understood that descriptions of apparatus embodiments correspond to the descriptions of the method embodiments. Therefore, for content that is not described in detail, refer to the method embodiments. For brevity, details are not described herein again.

For example, FIG. 19 is a diagram of a communication apparatus 1900 according to an embodiment of this application. The apparatus 1900 includes an obtaining unit 1910 and an allocation unit 1920. The obtaining unit 1910 is configured to obtain an output bit stream of a stream parser. The allocation unit 1920 is configured to allocate the output bit stream to L frequency domain subblocks. The L frequency domain subblocks are located at a high frequency, a frequency value of the high frequency is greater than or equal to 45 GHz, and L is an integer greater than 1.

It should be understood that a specific process in which the units perform the foregoing corresponding steps is described in detail in the foregoing method embodiments, and for brevity, details are not described herein again.

Optionally, the apparatus 1900 may be, for example, a segment parser.

Optionally, the apparatus 1900 is a communication device including a segment parser. The communication device is, for example, a terminal device, or may be a network device.

It should be understood that the apparatus 1900 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a combined logic circuit, and/or another appropriate component that supports the described functions. In an optional example, a person skilled in the art may understand that the apparatus 1900 may be specifically the segment parser in the foregoing embodiments, and may be configured to perform procedures and/or steps corresponding to the segment parser in the foregoing method embodiments. To avoid repetition, details are not described herein again.

The apparatus 1900 in the foregoing solutions has a function of implementing corresponding steps performed in the foregoing methods. The function may be implemented by hardware, or may be implemented by hardware executing corresponding software. The hardware or software includes one or more modules corresponding to the foregoing functions. For example, the obtaining unit may be replaced with a transmitter, and another unit such as the allocation unit may be replaced with a processor, to respectively perform sending and receiving operations and processing-related operations in the method embodiments.

For example, FIG. 20 is a diagram of another communication apparatus 2000 according to an embodiment of this application. The apparatus 2000 includes a processor 2010.

Optionally, the apparatus 2000 further includes a memory 2020 and a transceiver 2030. The processor 2010 is coupled to the memory 2020. The memory 2020 is configured to store a computer program or instructions and/or data. The processor 2010 is configured to execute the computer program or the instructions stored in the memory 2020, or read the data stored in the memory 2020, to perform the methods in the foregoing method embodiments. The transceiver 2030 is configured to receive and/or send a signal. For example, the processor 2010 is configured to control the transceiver 2030 to receive and/or send a signal.

Optionally, there are one or more processors 2010.

Optionally, there are one or more memories 2020.

Optionally, the memory 2020 and the processor 2010 are integrated together or separately disposed.

Optionally, the apparatus 2000 may be, for example, a segment parser.

Optionally, the apparatus 2000 is a communication device including a segment parser. The communication device is, for example, a terminal device, or may be a network device.

For example, the processor 2010 may have a function of the allocation unit 1920 shown in FIG. 19, the memory 2020 may have a function of a storage unit, and the transceiver 2030 may have a function of the obtaining unit 1910 shown in FIG. 19.

In a solution, the apparatus 2000 is configured to implement operations performed in the foregoing methods.

For example, the processor 2010 is configured to execute the computer program or the instructions stored in the memory 2020, to implement related operations of the segment parser in the foregoing method embodiments.

It should be understood that, the processor mentioned in embodiments of this application may be a central processing unit (central processing unit, CPU), and may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification is intended to include, but is not limited to, these and any other appropriate type of memory.

For example, FIG. 21 is a diagram of a chip system 2100 according to an embodiment of this application. The chip system 2100 (or may be referred to as a processing system) includes a logic circuit 2110 and an input/output interface (input/output interface) 2120.

The logic circuit 2110 may be a processing circuit in the chip system 2100. The logic circuit 2110 invokes the instructions in the storage unit, so that the chip system 2100 can implement the methods and functions in embodiments of this application. The input/output interface 2120 may be an input/output circuit in the chip system 2100, and outputs information processed by the logic circuit 2110, or inputs to-be-processed data or signaling information to the logic circuit 2110 for processing.

Specifically, the input/output interface 2120 is configured to obtain an output bit stream of a stream parser. The logic circuit 2110 is configured to allocate the output bit stream to L frequency domain subblocks. The L frequency domain subblocks are located at a high frequency, a frequency value of the high frequency is greater than or equal to 45 GHz, and L is an integer greater than 1.

It should be understood that details of performing the foregoing method by the input/output interface 2120 and the logic circuit 2110 are described in detail in the foregoing method embodiments. For brevity, details are not described herein again.

As described above, the communication apparatus provided in embodiments of this application may be a segment parser. Based on this, refer to FIG. 22. For example, an embodiment of this application provides a communication system 2200. The communication system 2200 includes a segment parser. Optionally, the communication system 2200 further includes a stream parser, for example, a stream parser 2220. Optionally, the communication system 2200 further includes an interleaver, for example, an interleaver 2231 and an interleaver 2232.

Optionally, there are one or more segment parsers. For example, two segment parsers are shown in FIG. 22.

Optionally, there are one or more interleavers 2230. For example, two interleavers are shown in FIG. 22.

Optionally, the communication system 2200 may be a terminal device or a component (for example, a chip, a circuit, or a module) used in a terminal device, or may be a network device or a component (for example, a chip, a circuit, or a module) used in a network device.

For example, an output bit stream output from the stream parser may be input to the segment parser, and the segment parser performs segment parsing on the output bit stream. For example, the segment parser allocates the output bit stream to L frequency domain subblocks, where bits on each frequency domain subblock may be input to a corresponding interleaver for interleaving or reordering. FIG. 22 is used as an example. An output bit stream #1 output from the stream parser may be input to a segment parser 2211, and the segment parser 2211 performs segment parsing on the output bit stream #1. For example, the segment parser 2211 allocates the output bit stream #1 to at least two frequency domain subblocks, where bits on each frequency domain subblock may be input to a corresponding interleaver (for example, the interleaver 2231 includes a plurality of interleavers, and each interleaver corresponds to one frequency domain subblock) for interleaving or reordering. For another example, an output bit stream #2 output from the stream parser may be input to a segment parser 2212, and the segment parser 2212 performs segment parsing on the output bit stream #2. For example, the segment parser 2212 allocates the output bit stream #2 to at least two frequency domain subblocks, where bits on each frequency domain subblock may be input to a corresponding interleaver (for example, the interleaver 2232 includes a plurality of interleavers, and each interleaver corresponds to one frequency domain subblock) for interleaving or reordering.

For functions of the segment parser, the stream parser, and the interleaver, refer to the foregoing descriptions. Details are not described herein.

An embodiment of this application further provides a computer-readable storage medium. The computer-readable storage medium stores computer instructions for implementing the method performed by the communication apparatus in the foregoing method embodiments.

For example, when the computer program is executed by a computer, the computer is enabled to implement the method performed by the communication apparatus in the foregoing method embodiments.

An embodiment of this application further provides a computer program product including instructions. When the instructions are executed by a computer, the method performed by the communication apparatus in the foregoing method embodiments is implemented.

For explanations and beneficial effects of related content in any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses, or units, and may be in electrical, mechanical, or other forms.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on the computer, the procedures or functions according to embodiments of this application are completely or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

   obtaining an output bit stream of a stream parser; and
   allocating the output bit stream to L frequency domain subblocks, wherein the L frequency domain subblocks are located at a high frequency, a frequency value of the high frequency is greater than or equal to 45 GHz, and L is an integer greater than 1.

2. The method according to claim 1, wherein the L frequency domain subblocks comprise a first frequency domain subblock, the first frequency domain subblock comprises a first subcarrier, and the first subcarrier is an additional subcarrier in a non-aggregated channel compared with an aggregated channel.

3. The method according to claim 2, wherein the first frequency domain subblock comprises the first subcarrier.

4. The method according to claim 3, wherein the first subcarrier is not contiguous in frequency domain.

5. The method according to claim 2, wherein in addition to the first subcarrier, the first frequency domain subblock further comprises a second subcarrier, and the second subcarrier is not the first subcarrier.

6. The method according to claim 1 or 2, wherein the L frequency domain subblocks further comprise a second frequency domain subblock, the second frequency domain subblock comprises a second subcarrier, and the second subcarrier is not the first subcarrier.

7. The method according to claim 5 or 6, wherein the second subcarrier is a subcarrier in the aggregated channel.

8. The method according to any one of claims 3 to 7, wherein a quantity of output bits allocated to the L frequency domain subblocks meets the following relationship:

$$S_i = N_i \cdot s,$$

   wherein
   $S_i$ is a quantity of output bits allocated to an $i^{th}$ frequency domain subblock in one round, $N_i$ is a positive integer obtained by rounding a quotient of a number of subcarriers comprised in the $i^{th}$ frequency domain subblock and a preset number of subcarriers, $s = \max\left(1, \dfrac{N_{BPSCS}}{2}\right)$, and $N_{BPSCS}$ is a quantity of output bits corresponding to one subcarrier in one stream.

9. The method according to claim 8, wherein the L frequency domain subblocks comprise one first frequency domain subblock and two second frequency domain subblocks, the first frequency domain subblock comprises z first subcarriers, one second frequency domain subblock comprises x1 second subcarriers, and the other second frequency domain subblock comprises x2 second subcarriers; and

quantities of output bits allocated to the first frequency domain subblock and the two second frequency domain subblocks in at least one round are respectively s, $N_1$s, and $N_2$s, wherein $N_1 = \left\lfloor \dfrac{x_1}{z} \right\rfloor$, and $N_2 = \left\lfloor \dfrac{x_2}{z} \right\rfloor$.

10. The method according to any one of claims 1 to 9, wherein the allocating the output bit stream to L frequency domain subblocks comprises:
allocating the output bit stream to the L frequency domain subblocks in a cyclic polling manner.

11. The method according to claim 10, wherein in at least one round of allocating the output bit stream to the L frequency domain subblocks in the cyclic polling manner, bits allocated to at least one of the L frequency domain subblocks are a result of being allocated at least twice.

12. The method according to any one of claims 1 to 11, wherein
each of the L frequency domain subblocks corresponds to one interleaver, and the interleaver is configured to interleave bits allocated to a corresponding frequency domain subblock.

13. A communication apparatus, comprising an obtaining unit and an allocation unit, wherein

the obtaining unit is configured to obtain an output bit stream of a stream parser; and
the allocation unit is configured to allocate the output bit stream to L frequency domain subblocks, wherein the L frequency domain subblocks are located at a high frequency, a frequency value of the high frequency is greater than or equal to 45 GHz, and L is an integer greater than 1.

14. The communication apparatus according to claim 13, wherein the L frequency domain subblocks comprise a first frequency domain subblock, the first frequency domain subblock comprises a first subcarrier, and the first subcarrier is an additional subcarrier in a non-aggregated channel compared with an aggregated channel.

15. The communication apparatus according to claim 14, wherein the first frequency domain subblock comprises the first subcarrier.

16. The communication apparatus according to claim 15, wherein the first subcarrier is not contiguous in frequency domain.

17. The communication apparatus according to claim 14, wherein in addition to the first subcarrier, the first frequency domain subblock further comprises a second subcarrier, and the second subcarrier is not the first subcarrier.

18. The communication apparatus according to claim 13 or 14, wherein the L frequency domain subblocks further comprise a second frequency domain subblock, the second frequency domain subblock comprises a second subcarrier, and the second subcarrier is not the first subcarrier.

19. The communication apparatus according to claim 17 or 18, wherein the second subcarrier is a subcarrier in the aggregated channel.

20. The communication apparatus according to any one of claims 15 to 19, wherein a quantity of output bits allocated by the allocation unit to the L frequency domain subblocks meets the following relationship:

$$S_i = N_i \cdot s,$$

wherein
$S_i$ is a quantity of output bits allocated to an $i^{th}$ frequency domain subblock in one round, $N_i$ is a positive integer obtained by rounding a quotient of a number of subcarriers comprised in the $i^{th}$ frequency domain subblock and a preset number of subcarriers, $s = \max\left(1, \dfrac{N_{BPSCS}}{2}\right)$ , and $N_{BPSCS}$ is a quantity of output bits corresponding to one subcarrier in one stream.

21. The communication apparatus according to claim 20, wherein the L frequency domain subblocks comprise one first frequency domain subblock and two second frequency domain subblocks, the first frequency domain subblock comprises z first subcarriers, one second frequency domain subblock comprises x1 second subcarriers, and the other second frequency domain subblock comprises x2 second subcarriers; and
quantities of output bits allocated by the allocation unit to the first frequency domain subblock and the two second frequency domain subblocks in at least one round are respectively s, $N_1$s, and $N_2$s, wherein $N_1 = \left\lfloor \dfrac{x_1}{z} \right\rfloor$ , and $N_2 = \left\lfloor \dfrac{x_2}{z} \right\rfloor$ .

22. The communication apparatus according to any one of claims 13 to 21, wherein the allocation unit allocates the output bit stream to the L frequency domain subblocks in a cyclic polling manner.

23. The communication apparatus according to claim 22, wherein in at least one round of allocating the output bit stream by the allocation unit to the L frequency domain subblocks in the cyclic polling manner, bits allocated by the allocation unit to at least one of the L frequency domain subblocks are a result of being allocated at least twice.

24. The communication apparatus according to any one of claims 13 to 22, wherein
each of the L frequency domain subblocks corresponds to one interleaver, and the interleaver is configured to interleave bits allocated to a corresponding frequency domain subblock.

25. A communication apparatus, comprising a processor, wherein the processor is configured to execute a computer program or instructions stored in a memory, to enable the apparatus to perform the method according to any one of claims 1 to 12.

26. A computer-readable storage medium, wherein the computer-readable storage medium stores a computer program or instructions, and when the computer program or the instructions are run on a communication apparatus, the communication apparatus is enabled to perform the method according to any one of claims 1 to 12.

27. A computer program product, wherein the computer program product comprises a computer program or instructions used to perform the method according to any one of claims 1 to 12.

FIG. 1

FIG. 2

FIG. 3

FIG.4

EP 4 618 617 A1

0 1 2 3 4 5 6 7 8 9 10 11 12    RU size≤996    0 1 2 3 4 5 6 7 8 9 10 11 12
13 14 15 16 17 18 19 20 ...    ———————→    13 14 15 16 17 18 19 20 ...

FIG. 5

(0 1)(4 5)(8 9)(12 13)(16 17)(20 21) ...

A size of an RU is greater than 996
A number of subcarriers corresponding to
two frequency domain subblocks is 2*996
$s=2$

0 1 2 3 4 5 6 7 8 9 10 11 12
13 14 15 16 17 18 19 20 ...

(2 3)(6 7)(10 11)(14 15)(18 19) ...

FIG. 6

(0 1)(6 7) ...

A size of an RU is greater than 996
A number of subcarriers corresponding to two
frequency domain subblocks is 484+996
$s=2$

0 1 2 3 4 5 6 7 8 9 10 11 12
13 14 15 16 17 18 19 20 ...

(2 3 4 5)(8 9 10 11) ...

FIG. 7

996

Used
independently

996

996

Used in
combination

996

FIG. 8

FIG. 9

FIG. 10

1100

| Obtain an output bit stream of a stream parser | 1110 |

| Allocate the output bit stream to L frequency domain subblocks, where the L frequency domain subblocks are located at a high frequency, a frequency value of the high frequency is greater than or equal to 45 GHz, and L is an integer greater than 1 | 1120 |

FIG. 11

High-frequency channel element #1

High-frequency channel element #2

x1

x2

(a)

x1

x2

$(x1+x2)$

(b)

x1

z

x2

(c)

FIG. 12

High-
frequency
channel
element #1

High-
frequency
channel
element #2

High-
frequency
channel
element #3

(x1+x2+x3)

(a)         (b)         (c)

FIG. 13

0 1 2 3 4 5 6 7 ...

FIG. 14

FIG. 15

FIG. 16

0 1 2 3 4 5 6 7 ...

FIG. 17

0 1 2 3 4 5 6 7  8 9 10 11 12 13 14 15 16 17 18 19 20 21 22 ...

FIG. 18

1900

Obtaining unit 1910

Allocation unit 1920

FIG. 19

2000

Processor 2010

Transceiver 2030

Memory 2020

FIG. 20

Chip system 2100

Logic circuit 2110

Input/Output interface 2120

FIG. 21

2200

Stream parser
2220

Output bit
stream #1

Output bit
stream #2

Segment parser
2211

Segment parser
2212

Interleaver 2231

Interleaver 2232

FIG. 22

## INTERNATIONAL SEARCH REPORT

| International application No. |
|---|
| **PCT/CN2023/103534** |

| **A.** | **CLASSIFICATION OF SUBJECT MATTER** |
|---|---|
| | H04W28/10(2009.01)i |

According to International Patent Classification (IPC) or to both national classification and IPC

| **B.** | **FIELDS SEARCHED** |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, CNKI, VEN, EPTXT, USTXT, WOTXT, 3GPP: 比特流, 大于, 分配, 分片, 解析, 高频, 新, 子载波, 45Ghz, FRAGMENTATION ANALYSIS, 802.11be, 802.11ax, high frenquency, bit, flow, subcarrier

| **C.** | **DOCUMENTS CONSIDERED TO BE RELEVANT** | | |
|---|---|---|---|
| Category* | Citation of document, with indication, where appropriate, of the relevant passages | | Relevant to claim No. |
| A | CN 114125929 A (HUAWEI TECHNOLOGIES CO., LTD.) 01 March 2022 (2022-03-01) description, paragraphs [0004]-[0567] | | 1-27 |
| A | CN 110447146 A (INTEL CORP.) 12 November 2019 (2019-11-12) entire document | | 1-27 |
| A | CN 113543331 A (HUAWEI TECHNOLOGIES CO., LTD.) 22 October 2021 (2021-10-22) entire document | | 1-27 |
| A | WO 2022005215 A1 (WILUS INSTITUTE OF STANDARDS AND TECHNOLOGY INC.) 06 January 2022 (2022-01-06) entire document | | 1-27 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 August 2023** | **23 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 618 617 A1

**INTERNATIONAL SEARCH REPORT**
Information on patent family members

International application No.

**PCT/CN2023/103534**

| Patent document cited in search report | | | Publication date (day/month/year) | Patent family member(s) | | | Publication date (day/month/year) |
|---|---|---|---|---|---|---|---|
| CN | 114125929 | A | 01 March 2022 | WO | 2022042081 | A1 | 03 March 2022 |
| CN | 110447146 | A | 12 November 2019 | KR | 20190089955 | A | 31 July 2019 |
| | | | | TW | 201838352 | A | 16 October 2018 |
| | | | | US | 2023145401 | A1 | 11 May 2023 |
| | | | | JP | 2022130459 | A | 06 September 2022 |
| | | | | JP | 2020507230 | A | 05 March 2020 |
| | | | | JP | 7089519 | B2 | 22 June 2022 |
| | | | | EP | 3560111 | A2 | 30 October 2019 |
| | | | | EP | 3560111 | A4 | 02 December 2020 |
| | | | | US | 2020091608 | A1 | 19 March 2020 |
| | | | | US | 11424539 | B2 | 23 August 2022 |
| | | | | WO | 2018119153 | A2 | 28 June 2018 |
| | | | | WO | 2018119153 | A3 | 14 March 2019 |
| | | | | US | 2022384956 | A1 | 01 December 2022 |
| | | | | DE | 112017006442 | T5 | 19 September 2019 |
| CN | 113543331 | A | 22 October 2021 | WO | 2021213345 | A1 | 28 October 2021 |
| WO | 2022005215 | A1 | 06 January 2022 | KR | 20230019124 | A | 07 February 2023 |

Form PCT/ISA/210 (patent family annex) (July 2022)

**REFERENCES CITED IN THE DESCRIPTION**

**Patent documents cited in the description**

- CN 202211441914